(19) Europäisches Patentamt
European Patent Office
Office européen des brevets

(11) **EP 3 369 313 B1**

(12) **EUROPEAN PATENT SPECIFICATION**

(45) Date of publication and mention
of the grant of the patent:
**06.11.2024 Bulletin 2024/45**

(21) Application number: **18154270.5**

(22) Date of filing: **26.03.2014**

(51) International Patent Classification (IPC):
*A01K 15/02* (2006.01)  *A23K 20/147* (2016.01)
*A23K 50/40* (2016.01)  *A23K 50/42* (2016.01)
*A23K 40/25* (2016.01)  *A23K 40/20* (2016.01)

(52) Cooperative Patent Classification (CPC):
**A01K 15/026; A23K 20/147; A23K 40/25;
A23K 50/40; A23K 50/42**

(54) **EDIBLE ANIMAL CHEW**

ESSBARES KAUSPIELZEUG FÜR TIERE

PRODUIT À MÂCHER COMESTIBLE POUR ANIMAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2013 GB 201305520**

(43) Date of publication of application:
**05.09.2018 Bulletin 2018/36**

(62) Document number(s) of the earlier application(s) in
accordance with Art. 76 EPC:
**14715077.5 / 2 983 491**

(73) Proprietor: **Mars, Incorporated
McLean, VA 22101 (US)**

(72) Inventors:
• **HEATH, Guy Graham
Batley, Yorkshire WF17 9LU (GB)**
• **GOSLING, Matthew Peter
Batley, Yorkshire WF17 9LU (GB)**

(74) Representative: **Haseltine Lake Kempner LLP
One Portwall Square
Portwall Lane
Bristol BS1 6BH (GB)**

(56) References cited:
**EP-A1- 0 552 897     EP-A1- 1 523 892
EP-A1- 1 692 946     EP-A2- 2 548 436
WO-A1-2008/014000     WO-A1-2012/156674
US-A- 6 086 940     US-A1- 2004 086 616
US-B1- 6 180 161**

## Description

The present invention relates to an edible animal chew. The present invention also relates to a method of producing an edible animal chew.

The maintenance of oral health in animals, such as dogs and cats, is important to maintain the overall health of the animal. A critical aspect of oral health maintenance is the regular removal of plaque. Without regular removal, plaque accumulates over time on the animal's teeth and is associated with the production of caries and the presence of gingivitis, amongst other problems.

Pet foods exist that offer some benefit to the oral health of animals. Such a pet food is described in EP0575021A2. A pet food of the type described in EP0575021A2 is also commercially available under the name Hill's Prescription Diet® t/d. This pet food claims to help keep a dog's teeth clean and control the oral bacteria found in plaque. The food has a nutritionally balanced mix of carbohydrate, protein, fat, vitamins and minerals. The cleaning action of the food is stated as stemming from the expanded striated structural matrix, which is designed to fracture when chewed by a dog and so offer a mechanical cleaning action via abrasive contact between the separated matrix layers and the tooth. WO 2008/014000 A1 discloses methods and materials for producing nutritious pet chews comprising an edible thermoplastic comprising from 45 to 80 wt. % starch selected from one or more potato and non-potato starches wherein said starch comprises at least 28% amylose as determined by size exclusion chromatography if less than 50% of said starch is potato starch or at least 20% amylose as determined by size exclusion chromatography if greater than or equal to 50% of said starch is potato starch; from 5 to 25 wt. % plasticizer; 2% to 15 wt % of a humectant and from 5 to 25 wt. % water.

Although such prior art products can aid in the maintaining of the oral health of animals, there still exists a need to provide improved means for maintaining the oral health of animals. In particular, there is a need to provide a convenient means by which pet owners can keep their pet's teeth healthy and clean.

The present invention provides such a means in the form of an edible animal chew that cleans the teeth and gums of an animal when it is consumed. In particular, the edible animal chew has been found to be particularly effective at removing plaque from the teeth of animals. It has also been found that the edible animal chew is effective at maintaining the oral health of an animal when fed at the comparatively low frequency of twice a week.

Although this invention is of use with a range of animals, it is of particular use with domestic pets. In particular, it has been demonstrated to be effective when used with dogs.

A first aspect of the present invention provides an edible animal chew comprising a starch content of 50 to 75 wt % relative to the total weight of the chew; a humectant content of 5 to 20 wt% relative to the total weight of the chew; wherein the chew has a density of 1.0 g cm$^{-3}$ or less; and wherein the starch comprises a potato starch and a maize starch; wherein the maize starch content of the chew is from 10 to 50 wt % based on the total weight of the chew; and wherein the potato starch content of the chew is from 5 to 25 wt % based on the total weight of the chew.

The edible animal chew of the present invention has a unique texture that, when consumed by an animal, contributes to maintaining the animal's oral health. In particular, the edible animal chews of the present invention are particularly effective at cleaning the teeth of the animal. The edible animal chew is effective even when fed to the animal only twice a week. This facilitates maintenance of the oral health of the animal without having to adhere to a daily treatment regime. It also lowers the calorie intake associated with maintaining the oral health of the animal.

The animal chew of the present invention exhibits a characteristic spongy texture, which the inventors believe is caused by its composition (and particularly the humectant content, which confers the ability to retain water), and a relatively low density. This unique texture allows the edible animal chew of the present invention to elastically rebound to a certain extent and so close up a hole formed by an animal tooth after the animal tooth is withdrawn during the chewing process. In other words, the animal chew of the present invention demonstrates an ability to self-heal to a certain extent. This self-healing ability of the animal chew increases the cleaning effects of the animal chew. It also leads to a greater amount of chewing being required for consumption of the chew, which contributes further to the cleaning effects of the chew, and which increases the lasting-time of the chew. To the inventor's knowledge, this unique texture has been unobtainable prior to this invention.

The animal chew of the present invention exhibits a greater digestibility than prior art chews. Digestibility is a measure of the ease with which a sample, such as a chew, can be digested. Samples that are hard to digest can lead to digestive problems. A chew which is easier to digest therefore lowers the risk of such digestive problems.

The term "edible" means that the animal chew of the present invention is not harmful to the animal when consumed and contributes to the nutritional and calorific content of the animal's diet. In a preferred embodiment, the edible animal chew is suitable for contributing from about 5% to about 15%, and preferably from about 10% to about 15%, of the recommended daily calorific intake for the animal. It will be appreciated by the person skilled in the art that the edible animal chew of the present invention is not an independent source of the animal's complete daily nutritional and calorific needs, and hence the chew of the present invention is referred to herein as "nutritionally incomplete".

The provision of a complete nutritional content is an essential element of prior art foods such as the Hill's Prescription diet® t/d. In contrast, the present inventors realised that it is possible to increase the ability of the chew to maintain or improve oral health without needing to simultaneously provide a complete nutritional content. Thus, the animal chew of the present invention is a complementary component of the animal's diet, and this in turn allows greater flexibility in the presence and/or amount of certain ingredients in the chew.

The calorific and nutritional contribution to the animal's diet is a differentiating feature between a 'chew' and a 'food'. Specifically, a conventional animal 'food' is nutritionally complete and provides the full range of the animal's daily nutrition requirements. It is also intended to be the major source of the animal's calorific intake.

A 'chew' is further distinguished from a 'food' with regard to its size. The largest pieces in a food product are smaller than the size of a chew. For instance, WO-01/50882-A discloses a food product which is reported as having a large size compared to other dried pet food, and discloses several examples. The largest of these examples is a triangular kibble having the following dimensions: thickness 16 mm, base 28 mm and sides 32 mm. This is in contrast to an animal chew, including the animal chew of the present invention, which has a largest dimension which is significantly larger. As used herein, a chew is an individual piece having a largest dimension of at least about 50 mm, preferably at least about 60 mm, and preferably at least about 70 mm.

A chew is further distinguished with regard to the time taken to consume a piece of chew compared to a piece of food. Normally the consumption time for a piece of chew is much longer than a piece of food. A piece of food may generally be consumed in less than 30 seconds by an average sized dog, whereas a chew would take at least 90 seconds for an average-sized dog to consume, and a chew of the present invention would typically take at least 200 seconds, more typically at least 300 seconds for an average-sized dog to consume. Preferably, the chew of the present invention exhibits a lasting time (in seconds) per gram of chew of at least 3 seconds per gram of chew.

The starch content of the edible animal chew of the present invention is from 50 to 75 wt% relative to the total weight of the animal chew. As used herein, weights relative to the total weight of the animal chew are with respect to the finished product, which is ready to be consumed by an animal. The starch content is further preferably from 55 to 70 wt% relative to the total weight of the chew, or 50 wt% to 70 wt%, or 50 wt% to 65 wt%, or 50 to 60 wt% relative to the total weight of the chew. The relatively high starch content of the chew of the present invention contributes to the edible animal chew's ability to retain its shape.

A contribution to the starch content of the chew may be derived from corn, wheat, modified wheat, tapioca, sorghum, potato, sweet potato, rice, pea, oat, beets, barley, soy, other cereals or grains and mixtures thereof. The chew comprises combination of maize starch and potato starch, optionally further a starch component derived from wheat flour.

In particular the potato starch content of the chew is from 5 to 25 wt% based on the total weight of the chew. It has been found that this level of potato starch effectively contributes to the chew's unique spongy texture and increased cleaning efficacy. It is preferred that the potato starch content of the chew is from 5 to 20 wt%, or from 5 to 15 wt%, preferably from 6 to 14 wt%, or from 7 to 13 wt%, or from 8 to 12 wt%, or from 9 to 11 wt% based on the total weight of the chew.

The chew comprises maize starch from 10 to 50 wt% based on the total weight of the chew. As noted above, it has been found that a combination of potato starch and maize starch is particularly effective. The maize starch content may be from 20 to 50 wt%, or from 30 to 50 wt%, or from 35 to 45 wt%, or from 37 to 43 wt%, preferably from 38 to 42 wt% based on the total weight of the chew.

The chew may also comprise wheat flour. The wheat flour content of the chew may be from 5 to 25 wt% based on the total weight of the chew. Preferably the wheat flour content is from 10 to 20 wt%, or from 11 to 19 wt%, or from 12 to 18 wt%, or from 13 to 17 wt% based on the total weight of the chew.

The chew may also comprise maltodextrin. The maltodextrin may be present in an amount of at least 0.5 wt%, or at least 0.8 wt%, or at least 1.0 wt%, preferably at least 1.2 wt% based on the total weight of the chew. Maltodextrin may be present in an amount of 1.0 wt% to 1.5 wt% based on the total weight of the chew.

It is preferred that the starch in the present invention has a relatively low amylose content. It is preferred that the starch of the edible animal chew comprises less than 28 wt% amylose (preferably less than 25wt%, preferably less than 20wt%) if less than 50wt% of said starch is potato starch, or less than 20wt% amylose if at least 50wt% of the starch is potato starch. It is preferred that the starch in the edible animal chew comprises less than 20 wt% amylose. The amylose content of the starch is the collective amylose content of all of the starches present. Therefore, the edible animal chew may comprise a variety of starches, including high amylose starches and low amylose starches, but it is preferred that the collective amylose content of all of these starches is as noted above. In further embodiments, the amylose content is less than 18 wt%, less than 16 wt%, less than 14 wt%, less than 12 wt% or less than 10 wt%. It is believed that a lower amylose content contributes to the advantageous texture and oral-care properties of the chew. The amylose content of the starch of the edible animal chew can be determined using size exclusion chromatography, as described herein.

It is preferable that the starch in the edible animal chew is at least partially gelatinised, i.e. at least a portion of the starch is gelatinised. The term 'gelatinised starch' as used herein means starch that has been processed in the presence of water such that its native granular structure has been destroyed and that the crystalline regions of the starch have been melted. Importantly, the effect of such processing is to convert the native starch, which is essentially indigestible, into a form which is digestible. The degree of starch gelatinisation may vary. The starch may have a degree of gelatinisation greater than 30 wt% on a total starch basis, preferably 45 wt% or greater or more preferably 75 wt% or greater. The gelatinisation levels may be greater than 80%, greater than 85%, greater than 90%, greater than 92.5%, greater than 95%, greater than 97.5%, greater than 98% and preferably at least 99% by weight. An increased level of gelatinisation is associated with an increased lasting time for the chew and further improves the oral care properties of the edible animal chew of the present invention.

The edible animal chew of the present invention has a humectant content of about 10 wt% to 20 wt%, preferably no more than about 18 wt%, preferably no more than about 16 wt%, and typically no more than about 15 wt%, relative to the total weight of the chew. The humectant content is preferably from about 10 to about 15 wt% relative to the total weight of the chew. A humectant content of from about 11 to about 13 wt% relative to the total weight of the chew is particularly preferred. Such a humectant content enables the edible animal chew of the present invention to retain water, and it is believed that this enables the chew to exhibit a more ductile, rather than brittle, response when chewed by an animal.

Exemplarily humectants include sucrose, sodium chloride, sorbitol, glycerol, starch hydrolysate, glucose, maltose, lactose, gums, citric acid, alanine, glycine, high fructose corn syrup, tartaric acid, malic acid, xylose, PEG 400, PEG 600, propylene glycol, aminobutyric acid, mannitol, mannose and lactulose. The humectant used may be one type of humectant or may alternatively consist of a mixture of types of humectants. Particularly preferred humectants are propylene glycol and glycerol. It is particularly preferred that both propylene glycol and glycerol are present in the edible animal chew of the present invention.

The chew may comprise glycol in the form of propylene glycol (when used herein, "glycol" refers to propylene glycol). The chew may comprise at least 0.5 wt% glycol, or at least 1 wt% glycol, or at least 1.5 wt% glycol, or at least 2 wt% glycol based on the total weight of the chew. Preferably, the chew comprises from 1 to 1.5 wt% glycol based on the total weight of the chew.

The chew may comprise glycerol. The chew may comprise less than 20 wt% glycerol, or from 5 wt% to 18 wt% glycerol, or from 8 wt% to 15 wt% glycerol, or from 9 to 13 wt% glycerol, preferably from 9 to 12 wt% glycerol based on the total weight of the chew.

The density of the edible animal chew of the present invention is 1.0 g cm$^{-3}$ or less. In other embodiments, the density of the edible animal chew is 0.95 g cm$^{-3}$ or less, or 0.90 g cm$^{-3}$ or less, or 0.80 g cm$^{-3}$ or less. Preferably the density is less than 0.80 g cm$^{-3}$, and in a further embodiment the density may be 0.70 g cm$^{-3}$ or less. The low density of the edible animal chew of the present invention ensures the chew has a spongy texture, enabling the chew to maintain or improve the oral health of the animal. Regardless of the upper limit of the density of the edible animal chew, it is preferred that the edible animal chew has a density of 0.4 g cm$^{-3}$ or greater (alternatively, 0.5 g cm$^{-3}$ or greater), otherwise the chew may not be able to easily retain its shape. The edible animal chew of the present invention is referred to as an "expanded product"; the density of an expanded product is achievable by virtue of the manufacturing method thereof which is described herein below.

The fat content of the edible animal chew of the present invention is preferably less than 10 wt% relative to the total weight of the chew, preferably less than 8 wt%, and in one embodiment less than 6 wt%, and in a further embodiment less than 5 wt% relative to the total weight of the chew. Such a low fat content helps to maintain the unique texture of the chew which results in its advantageous oral-care properties. Fat sources include corn, soy bean, cottonseed, peanut, grape seed, sunflower or olive oils, tallow, lard, shortening and butter and combinations thereof. Preferably, however, any fat present in the chew of the present invention is not derived from the addition of separate fat sources, but instead is derived simply from the naturally occurring (preferably low) level of fat present in the other components of the recipes, such as flours. Thus, the edible animal chew of the present invention preferably contains a low amount of fat specifically added to the composition as a separate ingredient in the recipe, and preferably such added fat is present in an amount of no more than 3.5 wt% relative to the total weight of the chew, preferably less than 3.0 wt%, preferably less than 2.5 wt%, preferably less than 2.0 wt%, preferably less than 1.5 wt%, preferably less than 1.0 wt%, and in one embodiment the chew comprises no fat added to the composition as a separate ingredient in the recipe.

The fibre content of the edible animal chew of the present invention is preferably less than 10 wt%, and preferably less than 8 wt%, relative to the total weight of the chew, and in other embodiments less than 6 wt% or less than 5 wt% relative to the total weight of the chew. The low fibre content helps to maintain the unique texture of the edible animal chew and so maintain its oral health benefits.

Fibre may be soluble fibre and/or insoluble fibre. Examples of fibre include soy fibre, rice hull fibre, pea hull fibre, oat hull fibre, barley hull fibre, sugar beet fibre, wheat bran fibre, fibres derived from animal tissue (for example from the skin, muscles, intestines, tendons, hides of animals), collagen and pure cellulose, dietary fibre sources include cell wall polysaccharides (cellulose, hemicelluloses, pectins) and non-cell wall polysaccharides (guar, locust bean gums, gum arabic, gum karaya, tragacanth gums, agar, alginates and carrageenan).

Fibre may be present in the chew in the form of fibre which is specifically added to the composition as a separate ingredient in the recipe. Alternatively, fibre may be present in the chew in the form of a minor and naturally occurring component in another ingredient. In a further alternative embodiment, the chew comprises fibre from both such sources. Preferably, however, the edible animal chew of the present invention contains a low amount of fibre specifically added to the composition as a separate ingredient in the recipe, and preferably such added fibre is present in an amount of no more than 3.5 wt% relative to the total weight of the chew, preferably less than 3.0 wt%, preferably less than 2.5 wt%, preferably less than 2.0 wt%, preferably less than 1.5 wt%, preferably less than 1.0 wt%, and in one embodiment the chew comprises no fibre added to the composition as a separate ingredient in the recipe.

The water content of the edible animal chew is from about 5 to 20 wt%, preferably from about 10 to about 15 wt%, or about 11 to about 14 wt%, or about 11 to 15 wt%, or 12 to 15 wt%, or 11 to 13 wt%, relative to the total weight of the chew. It has been found that such a water content is particularly beneficial for producing a texture that is effective at cleaning teeth. The stated water content range is the range present in the animal chew as supplied to the consumer, and prior to the chew being consumed by the animal, i.e. the finished edible animal chew.

The protein content of the edible animal chew of the present invention is suitably less than about 10 wt%, suitably from about 6 to about 10 wt%, relative to the total weight of the chew. The relatively low protein content is typically achieved by the absence of a component incorporated specifically for its protein content, but wherein one or more of the other ingredients of the recipe comprise a minor amount of protein and contribute to the total protein content of the chew.

The edible animal chew of the present invention exhibits a cohesiveness measured by Texture Profile Analysis (as described herein) of 0.55 or greater. Preferably, the cohesiveness is 0.57 or greater, or 0.60 or greater. Even more preferably, the cohesiveness is 0.61 or greater, or 0.62 or greater. Such high cohesiveness values are associated with the ability of the chew to retain its structure and so provide an increased cleaning efficacy when consumed by an animal.

Preferably, the chews of the present invention exhibit a value of cohesiveness/density of at least 0.65, preferably at least 0.70, preferably at least 0.75, preferably at least 0.80, preferably at least 0.85, preferably at least 0.90, preferably at least 0.95, and preferably at least 1.0 $g^{-1}cm^3$. The combination of high cohesiveness and low density has not been achievable prior to the present invention and is believed to be responsible for the ability of the chew to maintain the oral health of an animal (particularly when only consumed twice a week), combined with excellent lasting time. Preferably, the value of cohesiveness/density is not more than about 1.8, preferably not more than about 1.7, preferably not more than about 1.6, and preferably not more than about 1.5 $g^{-1}cm^3$.

In a second aspect of the present invention, an edible animal chew according to the appended claims is provided that exhibits a cohesiveness measured by Texture Profile Analysis of 0.55 or greater and a density of 1.0 g $cm^{-3}$ or less. Preferably the chew exhibits the cohesiveness/density characteristic noted hereinabove.

In a third aspect of the present invention, an edible animal chew according to the appended claims is provided that has a resilient texture that exhibits a relative rebound (measured as described herein) of 9.25% or greater, preferably at least 10%, preferably at least 11%, more preferably 12% or greater. The relative rebound characterises the ability of the edible animal chew to recover after being penetrated by an animal tooth. The present inventors have found that a relative rebound of 9.25% or greater is correlated with an increased ability of a chew to maintain or improve the oral health of the animal. Just as with cohesiveness described above, an increased relative rebound is indicative of an increased ability of the chew to recover after deformation, which has been correlated with an increased ability to maintain or improve the oral health of an animal, while maintaining excellent lasting time.

The combination of features required in the first aspect of the present invention is a means of providing the beneficial high cohesiveness and/or relative rebound in the other aspects of the present invention. Therefore, the features of all aspects can be readily combined together. The description of the chew herein is applicable to all aspects of the invention.

The texture of the edible animal chew of the present invention is preferably further characterised by a peak force (measured as described herein) of 9 kgf or greater. The inventors have found that such a peak force provides suitable resistance to the animal tooth to assist in the cleaning of the tooth during the chewing of the chew while providing excellent lasting time.

The texture may also be characterised by a stress, derived from hardness measured by Texture Profile Analysis (as described herein), of 0.25 kg $mm^{-2}$ or less, preferably 0.22 kg $mm^{-2}$, preferably less than 0.20 kg $mm^{-2}$, preferably less than 0.18 kg $mm^{-2}$, preferably less than 0.16 kg $mm^{-2}$, preferably less than 0.15 kg $mm^{-2}$. This ensures that the chew is not so hard as to present a significant fracture risk to the teeth of the animal. The stress is preferably greater than 0.1 kg $mm^{-2}$ so as to provide resistance to the animal's tooth when consumed.

The absolute value of the rebound (measured as described herein) exhibited by the edible animal chew of the present invention may be 5 kgf mm or greater, preferably 5.5 kgf mm or greater, and the inventors have found that this correlates with an improved teeth cleaning ability in an edible animal chew.

Another method of characterising the unique texture of the product is the Corrected Grip and Abrasion (CGA) test. This test is explained in detail below. It is preferred that the CGA test gives a positive, non-zero value for the CGA parameter, i.e. a CGA parameter value of greater than zero. It is preferred that the CGA parameter is greater than 1 kgf, alternatively greater than 2 kgf, alternatively greater than 3 kgf, alternatively greater than 4 kgf. It is especially preferred that the CGA test gives a value for the CGA parameter of between 4 and 20 kgf.

As used herein, the term "water activity" is a measurement of the energy status of the water in a system; represented by a quotient between water's partial pressure in the food and pure water's partial pressure. It indicates how tightly water is bound, structurally or chemically, within a substance. This is measured by equilibrating the liquid phase (in the sample) with the vapor phase (in the headspace) and measuring the relative humidity of that space. The water activity (Aw) is typically from about 0.50 to about 0.85, more preferably from about 0.50 to about 0.80, and more preferably from about 0.50 to about 0.75, even more preferably from about 0.50 to about 0.70.

Specific compositions of the invention are recited below as preferred embodiments, each of which may contain one or more of the further compositional features (particularly the amylose contents) and/or measured physical characteristics described herein. It will be appreciated that the preferences for the numerical ranges recited herein for any given parameter are also applicable to each of the preferred embodiments described below and those preferred numerical ranges are hereby incorporated into each of said preferred embodiments. Thus, reference in the following preferred embodiments to a density of 1.0 g cm$^{-3}$ or less, includes the preference stated hereinabove to a density of less than 0.8 g cm$^{-3}$; and reference in the following preferred embodiments to a humectant content of 5 to 20 wt% includes the preference stated hereinabove to a humectant content of 10 to 15 wt%. The amounts of each component are provided as amounts relative to the total weight of the chew unless otherwise stated. It should be noted that the amount of each component in the initial recipe substantially corresponds to the amount of that component in the final chew. Therefore, component amounts described herein when referring to the initial recipe, equally apply to the final chew and *vice versa.*

A particularly preferred edible animal chew of the present invention comprises a wheat flour content of 13 to 17 wt%, a maize starch content of 38 to 42 wt%, a potato starch content of 9 to 11 wt%, and, optionally, a maltodextrin content of 1.0 to 1.5 wt%. It preferably also further comprises a glycol content of 1.0 to 1.5 wt%, a glycerol content of 9 to 12 wt% and a water content of 11 to 15 wt%.

The edible animal chew described above can be in any of the structural forms described in WO2012/156674.

The edible animal chew of the present invention may be in a form having a longitudinal axis comprising: an outer wall extending in the direction of said longitudinal axis; and an internal support structure that contacts the inner surface of said outer wall at three or more points.

The internal support structure preferably defines a plurality of channels that extend in the direction of said longitudinal axis.

Animal chews of the present invention are preferably pet chews, more preferably dog chews.

The animal chew may be generally elongate in shape, and then the longitudinal axis of the animal chew is the axis that runs in the direction of the length of the animal chew. The longitudinal axis extends down the centre of the chew, perpendicular to the transverse cross-section. For example, if the animal chew is cylindrical in shape, then the longitudinal axis is the axis that runs perpendicular to the circular cross-section, and parallel to the walls, through the centre of the chew.

The outer wall of the animal chew defines the external shape of the animal chew. The outer wall has an inner surface that faces inwards towards the longitudinal axis of the animal chew. So, for the example of a chew that has the external appearance of a cylinder, the outer wall is the cylinder that forms the shell of the animal chew and the inner wall corresponds to the inner circumference of the circular outer wall cross-sectional shape.

The outer wall preferably has a cross-sectional shape that is substantially constant as it extends in the direction of the longitudinal axis, which increases the ease of manufacture of the chew. In an alternative embodiment, however, the cross-sectional shape may vary. Suitable cross-sectional shapes for the outer wall include shapes substantially described by polygons (including regular polygons), circles or ellipses. For instance, the outer wall cross-sectional shape may be a triangle, a square, a rectangle, a hexagon, or an octagon. Alternatively, the outer wall cross-sectional shape may be an irregular shape or contain curved sections.

The outer wall typically has a substantially constant wall thickness at each point around the circumference of the chew. The outer wall typically has a wall thickness that is substantially constant as the outer wall extends in the direction of the longitudinal axis of the chew. In one embodiment, however, the outer wall thickness may vary. The term "circumference" as used herein is not intended to refer only to an outer wall which is circular or elliptical, but refers also to the outer wall of chews of all other shapes possible for the present invention.

The internal support structure is contained within the outer wall of the animal chew. The internal support structure provides support to the outer wall. It contacts the inner surface of the outer wall at 3 or more points, preferably at 4 or more points, and in alternative embodiments at 5 or more points, at 6 or more points, at 7 or more points, or at 8 or more points. The internal support structure spans all of the points it contacts on the inner surface of the outer wall.

The internal support structure preferably defines a plurality of channels that extend in the longitudinal direction. The channels extend the length of the outer wall of the chew, i.e. they are coextensive with the outer wall in the direction of the longitudinal axis. Thus, the internal support structure also extends the length of the outer wall of the chew. The internal support structure is substantially parallel to the outer wall as it extends in the direction of the longitudinal axis, and it is preferably also of a substantially constant transverse cross-sectional shape as it extends in the direction of the longitudinal axis in order to increase ease of manufacture. In an alternative embodiment, however, the internal support structure may have a cross-sectional shape that varies as it extends in the direction of the longitudinal axis.

The plurality of channels may have cross-sectional shapes when viewed in the longitudinal direction (i.e. transverse cross-sectional shapes) that are polygons, circles or ellipses. Thus, the plurality of channels may have transverse cross-sectional shapes that are circular, triangular, square, rectangular or hexagonal. The plurality of channels may have the same transverse cross-sectional shape or they may have different transverse cross-sectional shapes. The plurality of channels may have a mixture of transverse cross-sectional shapes. The channels may be arranged so that their transverse cross-sectional shapes tessellate, being separated by the presence of one or more structural elements of the internal support structure. The internal support structure is preferably of a substantially constant thickness in the transverse direction between the channels. Alternatively, the internal support structure has a thickness in the transverse direction that varies around the edges of the channels.

Preferably there are four channels in the edible animal chew of the present invention.

The internal support structure increases the time required by an animal to break up and consume the chew. It is believed that the presence of an internal support structure increases the chewing time required to break up the animal chew in several ways. The presence of the internal support structure supports the outer wall when it is being chewed by an animal. Also, after the animal has broken through the outer wall, the presence of the internal support structure means additional chewing is required in order to completely consume the product. It has also been found that an animal chew with the combination of an internal support structure and the above-described compositions, or the combination of the internal support structure and the above described textural features is particularly effective at maintaining the oral health of an animal.

By contacting the outer wall at three or more points, the internal support structure ensures the outer wall is not just supported in one linear direction, but is supported in at least a 2-dimensional plane.

The presence of channels within the internal support structure allows the structure to improve the lasting time of the animal chew, while reducing the internal support structure's contribution to the calorie content of the animal chew.

As used herein, the 'lasting time' of a chew refers to the time taken for the animal to completely consume the product, i.e. the time from when the animal first begins to chew the product to the time when the animal swallows the last pieces of the product. The lasting time excludes any time that that the animal may be playing with the product but not actually chewing it.

The increased lasting time and the unique texture associated with animal chews of the present invention have numerous advantages. Animals' teeth and gums are cleaned by the chewing action, so the increased lasting time potentially results in a greater amount of teeth and gum cleaning. The increased lasting time also reduces the rate of calorie intake as the animal consumes the chew. The animal chews of the present invention result in greater design flexibility when manufacturing animal chews, as chews of the present invention can last longer for a given calorie content compared to prior art animal chews, or have a lower calorie content for a given lasting time compared to prior art animal chews, or have an increased lasting time coupled with a decreased calorie content compared to prior art animal chews. The increased lasting time associated with the animal chews of the present invention also facilitates the use of softer chew materials with the unique texture of the present invention, that could otherwise result in chews with a lower lasting time.

The channels defined by the internal support structure will be surrounded by the structural elements of the internal support structure optionally in combination with the outer wall when viewed in cross-section in the direction of the longitudinal axis (i.e. the transverse cross-section). Some channels may be completely surrounded only by the internal support structure when viewed in transverse cross-section. The feature of the internal support structure that is completely and solely surrounding a channel is termed herein as an inner wall. For channels completely surrounded by an inner wall, the outer wall does not form a part of its perimeter. The edible animal chew may contain one or more channels completely surrounded by an inner wall. Expressed in another way, the internal support structure may comprise at least one inner wall that defines one of the channels. The term 'surrounded' is used herein to refer to the enclosing of the channel in a 2-dimensional sense, and does not indicate that the channel is surrounded in all 3-dimensions to form an enclosed space; as noted hereinabove the channels extend the length of the outer wall of the chew.

The transverse cross-sectional shape of the channel surrounded by the inner wall may directly result from the cross-sectional shape of the inner wall, or the transverse cross-sectional shape of the channel may be different from the transverse cross-sectional shape of the inner wall which surrounds it. The possible channel shapes described herein will also apply as possible inner wall transverse cross-sectional shapes.

The inner wall is connected to the outer wall by structural elements referred to herein as struts, the struts forming part of the internal support structure. Thus, in a preferred embodiment the internal support structure comprises struts and at least one inner wall.

Where the inner wall is a polygon, it may be contacted by a strut at one or more of its vertices or it may be contacted by struts at all of its vertices. These struts may then also contact the outer wall or another inner wall, and where these other walls are polygons the struts may contact these walls at their vertices.

It is preferred that the internal support structure comprises at least one inner wall that defines one of said channels, said inner wall extending in the direction of said longitudinal axis.

The presence of an inner wall within the internal support structure further contributes to the increased lasting time exhibited by the animal chews of the present invention. Once the animal has broken through the outer wall of animal chew, they will still have to break through the struts that connected the outer wall to the inner wall, and then break through the inner wall itself. All of this contributes to increasing the work required of the animal to consume the animal chew, and therefore increases the animal chew's lasting time.

In one embodiment, the transverse cross-sectional shapes of the outer wall and/or the inner wall comprise at least one symmetry element. Typically, the transverse shape of the outer wall and the internal support structure combined will result in the transverse cross-section of the animal chew comprising at least one symmetry element. At least one symmetry element includes, for instance, an axis of rotational symmetry or one or more lines of reflectional symmetry, or a combination thereof. Typically, the transverse cross-sectional shapes comprise an axis of rotational symmetry and one or more lines of reflectional symmetry. The rotational symmetry is preferably at least 3-fold symmetry, for instance 4-fold, 5-fold or 6-fold rotational symmetry. The transverse cross-sectional shape preferably exhibits at least 3 lines of reflectional symmetry, for instance, 4, 5, 6, 8, 12 or more lines of symmetry. It will be appreciated that, in practice, minor irregularities in the extruded transverse cross-sectional shapes of the chew mean that the symmetry elements described herein do not require precise identity or indistinguishabiity after a symmetrical transformation, only that the cross-sectional shape is theoretically or substantially the same after such a symmetrical transformation.

The transverse cross-sectional shapes possessing at least one symmetry element will ensure a consistency in the mechanical properties of the animal chew around its transverse circumference.

In a preferred embodiment, the plurality of channels may be hollow. This keeps the calorie content of the animal chew low. Alternatively, the channels may be filled with a material different to that used for the outer wall and/or the internal support structure.

The outer wall and the internal support structure are suitably integrally formed, to allow maximum structural rigidity and ease of manufacture. The outer wall and the internal support structure are suitably made from the same material.

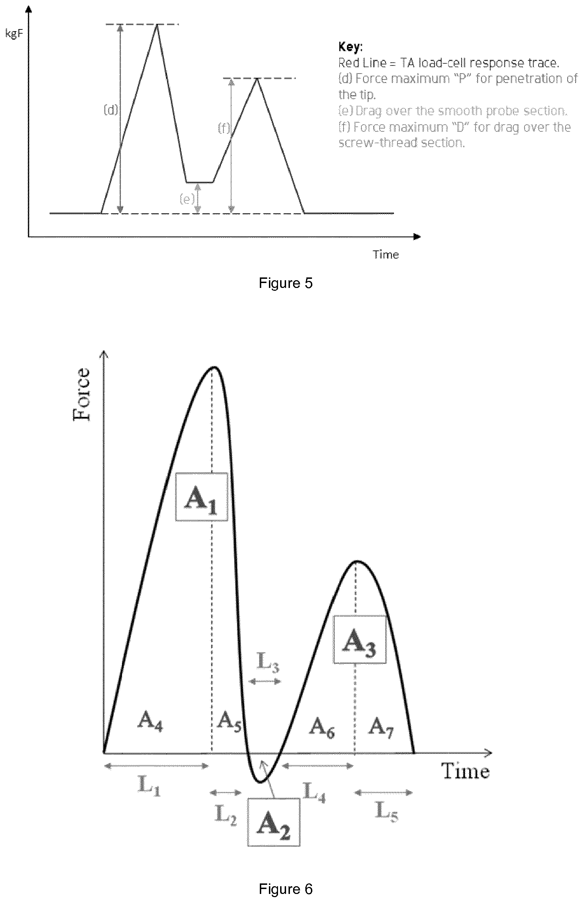

A particularly preferred structural form of the edible animal has an outer wall with a transverse cross-sectional shape having a curved outer wall and an internal support structure contacting the inner surface of the outer wall at four points, wherein there are four channels, each of the four channels being defined by a combination of the outer wall and the internal support structure. The cross-section of such a preferred structural form is depicted in Figure 6.

Therefore, an edible animal chew with the composition and/or texture defined above, combined with the structure defined above are particularly effective at maintaining the oral health of an animal.

The present invention further provides a method for producing an edible animal chew as described herein comprising the steps of mixing ingredients comprising a starch content of 50 to 75 wt% and a humectant content of 10 to 20 wt%, and optionally further comprising one or more of the additional ingredients described hereinabove (particularly as described for the first to fourteenth embodiments), to form an edible animal chew mixture; preferably gelatinising at least a portion of the starch contained in the mixture; forming an edible animal chew composition; extruding the composition out of an extruder so that it leaves the extruder at a temperature at or greater than the boiling point of the liquid portion of the recipe in order to provide an expanded product (and preferably it leaves the extruder at a temperature of 100°C or greater); and allowing the composition to expand to a density of 1.0 g cm$^{-3}$ or less to produce the edible animal chew.

The method has been found to produce a particularly advantageous expanded edible animal chew that provides an improvement in oral health when chewed by an animal.

By extruding the composition such that it leaves the extruder at a temperature of at least 100°C, steam is produced within the extrudate which facilitates the expansion of the product on exiting the extruder to the required density of 1.0 g cm$^{-3}$ or less. It is particularly preferred that the composition leaves the extruder at a temperature of from about 105°C to about 120°C, preferably at least 107°C, and preferably from 105°C to 115°C, and in a preferred embodiment less than 115°C. In one embodiment the temperature range is 107°C to 120°C. The inventors have found that such temperature ranges are particularly effective at producing the desired expansion and texture of the expanded edible animal chew of the present invention.

The temperature of the extrudate leaving the extruder can be controlled by the temperature of the final barrel of the extruder before the exit. The temperature in the final barrel may be 90°C or greater, preferably 95°C or greater, or 100°C or greater, or 105 °C or greater, or 110°C or greater, or 115°C or greater. Increasing the temperature of the final barrel of the extruder assists in lowering the density of the extruded product. The temperature of the extrudate leaving the extruder is also determined by other factors, including the energy input from, and removal by, other sources such as heat input from earlier barrels of the extruder, frictional heating and shear forces (which may be determined by, *inter alia*, screw speed), and application of vacuum.

A vacuum may be applied to a barrel of the extruder. Application of a vacuum acts to lower the boiling point of the liquid component in the extrudate, and to remove moisture and heat as steam. In this way, the application of vacuum provides a further means to control the temperature of the extrudate exiting the extruder (a higher vacuum results in a lower temperature) and the moisture content of the final chew (a higher vacuum results in lower moisture). Vacuum is particularly important in controlling the expansion of the product since varying the moisture content and the temperature of the extrudate together allows modulation of the degree of expansion. Preferably, a vacuum is applied to the extruder in the penultimate barrel of the extruder. The vacuum applied to a barrel (preferably the penultimate barrel) is preferably in the range of 0.50 to 0.57 bar. It has been found that this level results in the production of chews with a desirable final moisture content.

It is preferred that the screw speed is 160 rpm or greater, in order to achieve the desired level of expansion of the extrudate into the final product. It is further preferred to utilise a screw speed of 170 rpm or greater, or 180 rpm or greater, or 190 rpm or greater, or 200 rpm or greater, or 205 rpm or greater.

The solids are preferably introduced into the extruder in the form of powders. It is preferred that the powder:liquid ratio of the ingredients fed into the extruder is in the range of 70:30 to 80:20. Particularly preferred powder:liquid ratios are about 75:25 or about 74:26. A higher powder:liquid ratio results in an easier to form chew but with a harder texture. In particular, it is preferred that the powder components of the recipe (i.e. the ingredients) make up 70 to 80 wt% of the total recipe, preferably 72 to 77 wt% of the total recipe, or 74 to 76 wt% of the total recipe.

In a preferred embodiment of the method, the initial composition of the edible animal chew mixture comprises a relatively low amount of water (preferably less than 14 wt%, preferably less than 12 wt%, preferably less than 10 wt%, preferably less than 8 wt% and preferably less than 6 wt%), and said mixture is introduced into, or formed within, an extruder, wherein water (preferably in the form of steam) is introduced into the extruder to increase the water content, preferably such that the edible animal chew formed therefrom exhibits a final water content as described herein, such as a water content of 10 wt% to 15 wt% relative to the total weight of the chew.

In the method of the present invention, it has been found that as the powder content of the recipe decreases, energy input to the extruder needs to be increased in order to manufacture an expanded chew with the desired density and texture characteristics. Preferably, where the powder content of the recipe is less than 74 wt% relative to the total weight of the chew, the final barrel temperature is at least 100°C and the screw speed is at least 170 rpm.

Other methods of expanding the chew to a low density of 1.0 g cm$^{-3}$ or less may also be used. For example, the composition could include a chemical leavening agent which causes the chew to expand.

In the method of the present invention, it is preferred that the mixture of ingredients are introduced into a twin-screw cooker extruder, providing a combination of heating and mechanical shear sufficient to gelatinise at least a portion of the starch component of the recipe and to provide a microbiological kill step for the product, achieving at least a temperature of 90 °C. The final product comprises starch (50- 75 wt%), protein (less than about 10 wt%, suitably 6-10 wt%), water (10-15 wt%) and a humectant (10 to 20 wt% (preferably 10 to 15 wt%)) with additional flavours for increased palatability for an animal, such as a dog. The product is sufficiently expanded out of the nozzle (the product exit temperature may be 105-120 °C) to provide a chewy texture that cleans up to the gumline of the animal's mouth.

A typical manufacturing process, for instance a conventional extrusion gelatinization process for making a chew comprising gelatinized starch, is as follows. Thus, in an extrusion gelatinization process, a dry feed mixture is prepared from the starch source in the form of a flour or meal, and optionally a fibre source. The dry feed mixture may then be fed into a preconditioner or straight into the extruder. In the preconditioner, water or steam, or both, is mixed into the dry feed mixture. Further, liquid flavour components, such as flavour digests or tallow, may be mixed into the dry feed mix in the preconditioner. Sufficient water and/or steam, and optionally liquid flavour components, is/are mixed into the feed mixture to raise the moisture content of the dry feed mixture. The moistened feed leaving the preconditioner is then fed into an extruder. The extruder may be any suitable single or twin screw cooking-extruder. Suitable extruders may be obtained from, for instance Wenger Manufacturing Inc, Clextral SA, Buhler AG. During passage through the extruder, the moistened feed passes through a cooking zone, in which it is subjected to mechanical shear and heat, and a forming zone. The gauge pressure in the forming zone is from about 600 kPa to about 10 MPa. If desired, water or steam, or both, may be introduced into the cooking zone. Other liquids, including the humectants such as glycerol or glycol, may also be introduced into the extruder during cooking.

Further, during passage through the extruder, the starch ingredients of the moistened feed are gelatinized to provide the gelatinized starch matrix. The gelatinization of the starch is achieved by processing at elevated temperature, and controlling one or more of the cooking time, moisture and/or shear. Low moisture contents, such as those which prevail in many extrusion cookers (< ca. 30% and often < ca. 20% moisture) are generally unfavourable to starch gelatinization. Hence, many extrusion cookers rely upon the generation of a great deal of shear stress to mitigate the low moisture conditions and achieve high levels of starch gelatinisation (see "The Technology of Extrusion Cooking", N.D. Frame (Ed.). Blackie Academic and Professional, 1994, Chapter 3). Finally, the composition is forced through the extrusion die and allowed to expand to produce a chew of the present invention.

The present invention is illustrated in the drawings, in which:

Figure 1 is a depiction of the probe used in the rebound measurements.

Figure 2 is a schematic plot of force against distance measured for a rebound measurement performed on a chew of the present invention.

Figure 3 is the schematic plot of Figure 2, indicating the regions representing different energies.

Figure 4 is a depiction of the probe used with the CGA method

Figure 5 is a schematic plot of force measured with time for a CGA measurement performed on a chew of the present invention.

Figure 6 is a schematic of a Texture Profile Analysis measurement.

Figure 7 is a plot of data comparing the properties of a chew of the present invention with prior art chews.

The following test methods were used to characterise the properties of the novel compounds disclosed herein.

*(i) Rebound Measurement*

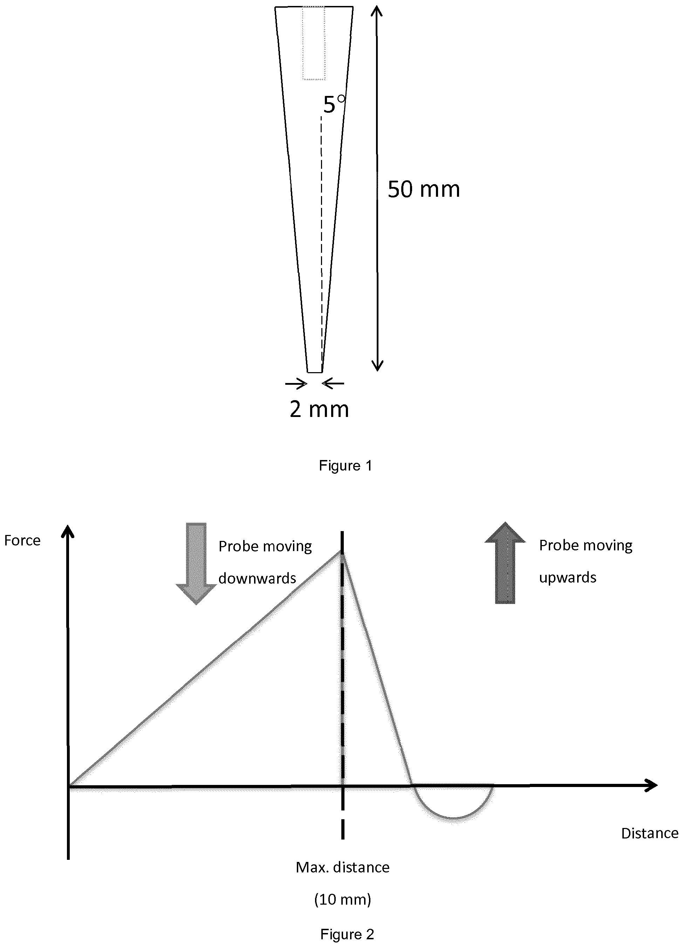

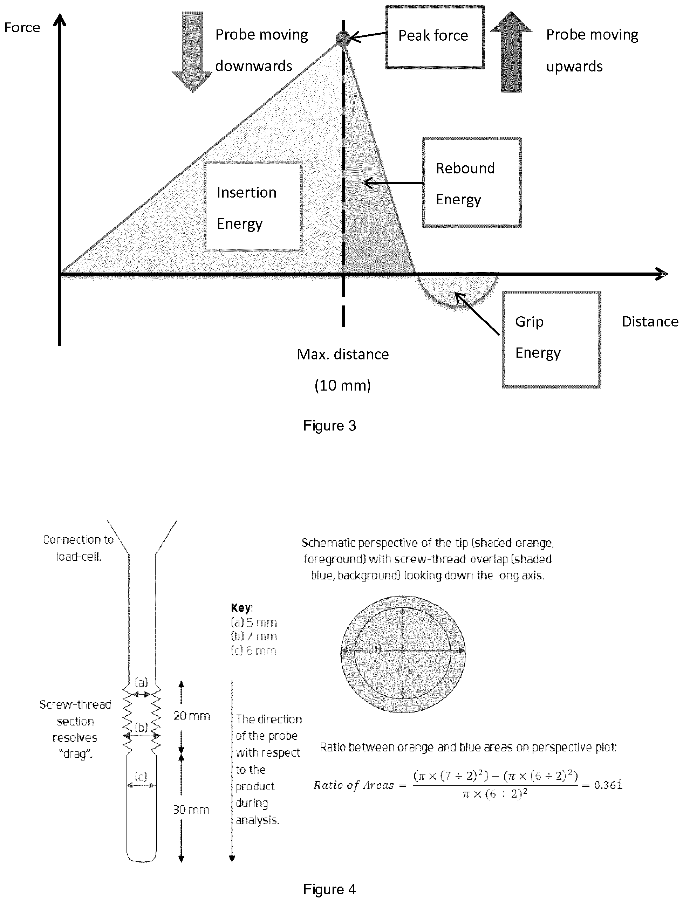

The rebound measurements are taken using a flat ended conical probe, as depicted in Figure 1, fitted to a Stable Microsystems XHDi texture analyser. The flat ended conical probe has a 10° opening angle and a flat end that is 2 mm in diameter. The probe is 50 mm in length and is constructed from stainless steel.
The rebound measurement is performed on a sample with a thickness greater than 10 mm. The probe is then set up to penetrate to a set depth of 10 mm into the sample (ensuring that the probe does not travel all the way through the sample) at a speed of 1 mm s$^{-1}$. When the probe has travelled 10 mm into the sample, the probe's direction of travel is then immediately reversed and it is withdrawn from the sample at a speed of 1 mm s$^{-1}$. During this process the force required to move the probe is recorded. The test is performed at 22 °C and the product is incubated at 22 °C prior to the testing to ensure it is of a uniform temperature.
From these measurements it is then possible to plot a variation in force with distance travelled by the probe. This is schematically illustrated for an edible animal chew of the present invention in Figure 2, where the force variation with distance is recorded for the initial downwards movement of the probe into the sample and then the upwards movement out of the sample. The area under the force profile represents the energy required. As can be seen in the schematic results, the force required to move the probe increases as the probe is inserted further into the sample. When the probe's direction is reversed, and the probe starts to be withdrawn, the force starts to decrease. The force required to maintain the speed of 1 mm s$^{-1}$ is observed to be positive during the withdrawal for a chew of the present invention. This indicates that work has to be done to stop the probe from being pushed out further by the sample. Therefore, the energy under this portion of the curve is indicative of the tendency of the sample to re-heal and close up the hole created by the probe. Finally near the end of the withdrawal of the probe the force turns negative as energy is being expended to continue the removal of the probe. This section of the measurement is indicative of the sample exerting a grip on the probe stopping it from leaving the sample.
The energies derivable from the different areas are indicated in Figure 3. The insertion energy, which represents the energy required to insert the probe to a distance of 10 mm into the sample, is the area under the force-distance plot up to a distance of 10 mm. The rebound energy (rebound), which is the energy required to stop the probe from being forced out at a speed greater than the 1 mm s$^{-1}$ withdrawal speed used in the experiment, is the area under the force-distance plot after the 10 mm maximum distance until the force returns to zero. The grip energy, which represents the energy required to extract the probe from the sample, is the area under the force-distance plot after the force has returned to zero during the removal of the probe. The relative rebound energy is a measure of this rebound energy as a percentage of the insertion energy, i.e.

$$relative\ rebound\ energy = \frac{rebound\ energy}{insertion\ energy} \times 100.$$

The peak force is the highest force experienced during the experiment, and is typically the force at the maximum distance of 10 mm.
It has been found by the inventors that there is a correlation between the rebound energy and the effectiveness of teeth cleaning exhibited by a chew, as well as a correlation between the relative rebound energy and the effectiveness of teeth cleaning exhibited by a chew.

### (ii) Corrected Grip and Abrasion parameter (CGA)

The Corrected Grip and Abrasion (CGA) method is a way to score the relative level of "drag" that a tooth surface may experience when acting upon the product from both the recoil and the toughness of the contact surface. In order to resolve this effect a penetration probe having a "screw-thread" section further up the shaft is utilised. This is to amplify the effects of drag at the contact surface via the introduction of a mutually "roughened" surface. The layout of the probe is depicted in Figure 4. The diameter of the main section of the probe is 6 mm whilst the most narrow and most wide diameter limits of the "screw-thread" section are 5 and 7 mm respectively. The "screw-thread" section is 20 mm long whilst the smooth section of the probe between the tip and "screw-thread" onset is 30 mm.

Although denoted as a "screw-thread" section, this part of the probe is not in the form of a helical screw thread but is instead a series of circular ridges that run around the longitudinal axis of the probe. As noted above, each circular ridge extends to a circular diameter of 7 mm, while the indentation between adjacent circular ridges has a narrower diameter of 5 mm. There are 20 evenly-spaced ridges along the 20 mm of the probe that is the "screw-thread" section. Therefore the ridges occur at a frequency of 1 ridge per mm along the longitudinal direction of the probe.

The test is performed on a sample with a minimum face area of 1 cm$^2$ and a thickness of 2 cm. The probe is set up to travel in the thickness direction of the sample and penetrate the face area. The test is performed at 22 °C and the product is incubated at 22 °C prior to the testing to ensure it is of a uniform temperature.

As the probe passes through the product (at 20 mm s$^{-1}$) there are two points at which its passage is resisted by the product to give peak force maxima. The first occurs during the initial penetration of the tip whilst the second occurs when the screw-thread section passes through the product (all data is recorded from the penetrating stroke of the probe, no data from the withdrawal of the probe is considered). This gives rise to a plot that can be approximated as the schematic depicted in Figure 5.

To get a true interpretation of the drag over the screw-thread section a correction is applied. Clearly, because the first face of the screw-thread overshoots the main body of the probe in terms of its diameter, there is some contribution of a pseudo-penetrative element where the aforementioned face shears away some of the product. This contribution can be approximated as the product of the force maximum "P" and the ratio of the two-dimensional areas shown in the perspective plot above. Essentially the extra shear has been calculated as a predicted proportion of the penetration (P) peak. This is then subtracted from the drag (D) parameter to give the "corrected grip and abrasion" (CGA) parameter as described in the following equation:

$$CGA = D - \left( \left( \frac{(\pi \times (7 \div 2)^2) - (\pi \times (6 \div 2)^2)}{\pi \times (6 \div 2)^2} \right) \times P \right)$$

A significant amount of drag will therefore result in a positive and non-zero CGA parameter, while an insignificant amount of drag will result in a zero or negative CGA parameter.

### (iii) Density

The density is measured using the water displacement method. The sample is first weighed and then completely submerged in water. The volume of the water displaced by the sample is equal to the volume of the sample. The density can then be calculated.

### (iv) Amylose content

The amylose content is determined by dissolving the starch components of the chew in a dimethyl sulfoxide and water 90%/10% solution and heating for 1 hour at 95 °C with mixing, then filtering and running on HPLC using size exclusion chromatography. The size exclusion chromatography is accomplished with a Shimadzu RI detector. Amylose and amylopectin ration is determined by measuring the area under the peaks.

### (v) Moisture content

The moisture content (i.e. water content) of the samples is measured using the following procedure. An aluminium dish is dried in an oven at 102 $\pm$ 2 °C for at least one hour. The tray is removed from the oven and placed in a dessicator and allowed to cool for at least 30 minutes to reach room temperature. The weight of the dried dish is then

recorded (A). 5 $\pm$ 0.5 g of sample is placed in the dish and the dish is reweighed to give a combined weight of sample and dish (B). The sample-containing dish is then placed inside an oven held at 102 $\pm$ 2 °C for 240 minutes $\pm$ 5 minutes, the time is recorded from the point when the oven has reached equilibrium and the oven door remains closed throughout this time. The sample-containing dish is then removed and placed in a dessicator for 30 minutes and then reweighed to give a final combined weight of dish and sample (C). The moisture content of the sample as a percentage of the total weight of the sample is then given by $\left(\frac{B-C}{B-A}\right) \times 100$.

### (vi) Repeat three point bending measurements

The three-point bend equipment is set up on the texture analyser with the supports separated by 80 mm or 100 mm. The upper section is set to descend halfway between the two supports. The sample is placed across the supports. The texture analyser is programmed to deform the sample by 40 mm (for small and medium chews) or 50 mm (for large chews), at a speed of 10 mm/s. The upper section then returns to the start position at a speed of 2 mm/s. This cycle is repeated a total of 5 times. The slow return speed allows the sample to relax before the next deformation. The peak forces recorded during each cycle are then collated. The peak force for the 5th cycle is then given as a percentage of the peak force for the 1st cycle, which gives an indication of the level of fatigue in the sample: e.g. if the 5th peak is 90% of the 1st peak, then the sample has not fatigued very much, but if it is 10% the opposite is true.

### (vii) 6mm Probe Peak Force

When explicitly stated herein, the peak force has been measured using a 6 mm diameter stainless steel cylindrical probe. In this method the cylindrical probe penetrates the sample at a speed of 1mm/sec until it exits the other side. The force required to move the probe is monitored and the peak force required is recorded. The test is carried out at 22 °C and the test samples are equilibrated in an oven at 22 °C for at least 1 hour prior to testing.

### (viii) Degree of starch gelatinization

The method of measurement of the degree of starch gelatinization is as follows. The sample is first incubated with an extract of $\alpha$-amyloglucosidase, buffered to pH 4.8 with sodium acetate, at 40°C for 3 hours. The reagents for this step are prepared as follows.

1. The pH 4.8 buffer solution is prepared by adding 32.8 $\pm$ 0.10g of sodium acetate into a 200 ml volumetric flask. 15 ml of glacial acetic acid and then approximately 80 ml of de-ionised water is added to dissolve the solids. The flask is cooled to room temperature and made up to volume with de-ionised water, stoppered and mixed thoroughly.
2. The $\alpha$-amyloglucosidase extract is prepared by transferring all of the buffer solution obtained in step 1 into a 500 ml beaker, and stirring vigorously with a magnetic stirrer and slowly transferring 2.00 $\pm$ 0.05g of $\alpha$-amyloglucosidase to the beaker. This is then stirred for between 1 and 2 hours, and then filtered through Whatman GF/A (1.6 $\mu$m) filter paper. This solution is stable for 1 week if stored at approximately 4°C.

The hydrolysis step (with amyloglucosidase) then takes place as follows.

1. 1.00g $\pm$ 0.010g of the sample under test is placed into a 150 ml stoppered conical flask and 45 $\pm$ 3 ml of de-ionised water is added and swirled gently to disperse the sample. 2 x 5 ml aliquots of the amyloglucosidase solution are added and the flask is gently swirled. Sample material adhering to the flask walls is rinsed with a small quantity of de-ionised water. The pH of the solution is measured and is adjusted to 4.8 $\pm$ 0.1 pH unit using 0.1M acetic acid (aqueous solution in de-ionised water). The probe is rinsed with a small amount of de-ionised water and the washings collected in the flask. If the pH is too low, it may be adjusted using 0.1N sodium acetate (aqueous solution in de-ionised water).
2. The flask is then lightly stoppered and placed in an incubator at 37 $\pm$ 2°C swirling every hour, for not less than 3 hrs and not more than 3.25 hrs.
3. The contents of the flask are then quantitatively transferred to a labelled 250 ml volumetric flask to a volume of 200 ml.

The hydrolysate prepared in this manner is clarified using Carrez reagents (zinc acetate; potassium ferrocyanide) and filtered. Under these conditions the starch is fully hydrolysed to glucose. The reagents for this step are prepared as follows.

1. The Carrez (I) reagents are prepared by weighing 219.0 ± 0.10g of the zinc acetate dihydrate into a 1000 ml volumetric flask, and adding 30 ml glacial acetic acid. The flask is then filled to volume using de-ionised water, stoppered and shaken. This solution is stable indefinitely.

2. The Carrez (II) reagents are prepared by weighing 106.0g ± 0.10g of the potassium ferrocyanide into a 1000 ml volumetric flask. The flask is then filled to volume using de-ionised water, stoppered and shaken. This solution is stable indefinitely.

The clarifying step then takes place as follows.

1. 2 x 5 ml aliquots of the Carrez (I) solution are added to the flask containing the hydrolysate and the flask is swirled. 2 x 5 ml aliquots of the Carrez (II) solution are added to the flask and the flask is swirled. The flask is left to stand for between 10 minutes and one hour. The flask is made up to volume with de-ionised water, stoppered and inverted several times to mix the contents.

2. Aliquots of the extract are filtered through Whatman No. 4 filter paper (18 cm), and about 100 ml of filtrate is collected. 5.0ml of the filtrate is transferred into a labelled 100ml volumetric flask. The flask is then filled to volume using de-ionised water, stoppered and shaken thoroughly.

The amount of free glucose in the samples (prior to hydrolysis) is also determined by measuring the glucose levels in samples prepared by repeating the above steps, but without the addition of 2 x 5 ml aliquots of the amyloglucosidase solution (step 1 of the hydrolysis section).

The glucose level is quantified spectrophotometrically from the samples. Prior to measurement with the spectrophotometer, hydrogen peroxide is produced from the action of glucose-oxidase on the liberated glucose in the samples (the GOD-PAP reaction), this hydrogen peroxide is used to oxidize 4-amino phenazone and phenol, which produces a colour. This colour is measured spectrophotometrically.

For this step the reagents are prepared as follows.

1. A 0.05g/l glucose standard is prepared by weighing 0.5000 ± 0.0010g of glucose into the 500 ml volumetric flask, dissolving in de-ionised water to make up to volume, stoppering and mixing. 5.0ml of the above solution is transferred to a 100ml volumetric flask, and filled to volume with de-ionised water, stoppered and mixed thoroughly. Such a solution must be used on the day of preparation.

2. A GOPOD (also known as a GODPOD) reagent, containing greater than 12,000 U / litre of glucose oxidase, greater than 650 U / litre of peroxidase, and 0.04 mM 4-amino-antipyrine in a glucose reagent buffer, is prepared 1 litre at a time. It is prepared according to the conventional technique for glucose determination used in a variety of standard analytical methods, for example AOAC method 995.16. It is stable for three months if kept in an amber flask at 2 to 5 °C.

The spectrophotometer step is then carried out as follows.

1. 4 ml of GODPOD reagent is added to a 50 ml amber stoppered test-tube. 1000μl of the diluted filtrate obtained as described above is added and immediately stoppered and vortex mixed thoroughly.

2. This step is repeated for separate 1000μl aliquots of de-ionised water and the diluted (0.05g/l) glucose standard.

3. All of the tubes obtained above are transferred to a darkened cupboard at room temperature for between 60 and 120 minutes.

4. The spectrophotometer sample cuvette is loaded with the solution to be measured, and the absorbance reading is checked to confirm it is stable. The absorbance of the sample is recorded.

This is repeated for the glucose standard solution. The absorbance of these solutions is then measured and recorded for a second time.

The following equation is then used to calculate the percentage of the sample that is gelatinized starch, based on the total amount of glucose present in the sample after hydrolysis:

$$\% \, GelStarch = \frac{Abs_{SMP} \times Conc_{STD} \times Vol\_1_{SMP} \times Vol\_2_{SMP} \times 100}{Abs_{STD} \times Vol\_3_{SMP} \times Wt_{SMP} \times 1.111}$$

wherein

$Abs_{SMP}$ = Absorbance of sample solution

Conc$_{STD}$ = Concentration of standard solution, g/l (0.05 g/l)
Vol_1$_{SMP}$ = Initial sample volume, l, (250ml from step 1 of the clarifying step)
Vol_2$_{SMP}$ = Final sample volume, ml, (100ml after dilution)
Abs$_{STD}$ = Absorbance of standard solution
Vol_3$_{SMP}$ = Volume of aliquot taken for sample dilution, ml, (5.0ml)
Wt$_{SMP}$ = Weight of sample, g.

A correction is made for free glucose present in the sample before the hydrolysis step. The calculation just described is repeated for the portion that was not hydrolysed. The percentage resulting from the free glucose is then subtracted from the percentage calculated from the hydrolysed portion, to give the true percentage of the sample which is gelatinized starch.

In order to calculate the percentage of starch gelatinization, it is necessary to know the percentage of starch in the sample. The total percentage of starch in the sample is determined using the Ewers polarimetric method (ISO 6493:2000).

The true percentage of the sample which is gelatinized starch is then divided by the percentage of starch in the sample and multiplied by 100 in order to give the percentage of starch gelatinization.

### (ix) Texture Profile Analysis

Texture Profile Analysis (TPA) allows the determination of several parameters that characterise the texture of the sample. The sample is first incubated at 22°C for 1 hour prior to testing. The samples are tested immediately after removal from the incubator. The sample is then cut transversally into slices of 10mm thickness. These samples are laid flat in the centre of a flat surface such that the sample is compressed in the longitudinal direction. Using a texture analyser (Stable Micro Systems TA HD Plus) a compression platen of a size sufficient to compress the entire surface of the sample is used to compress the product to 50% strain, or 50% of its overall height at a speed of 1mm/s. In the case of the 10mm high sample, the distance to 50% strain is 5mm. Once the required strain distance is reached, the probe is then moved upwards immediately at rate of 1mm/s and stops 10mm above the base plate, the original sample height. After completing the first compression cycle, the compression platen pauses for a period of 5 seconds in which the product, dependant on its material properties can recover some of its original shape and form. The second compression cycle is then carried out. The compression platen is moved down to the distance that was required to achieve 50% strain during first compression (in this case 5mm) at a speed of 1mm/s. After reaching the required strain distance, the probe is then moved upwards immediately at rate of 1mm/s and stops at the original probe height.

A schematic of a Texture Profile Analysis measurement is shown in Figure 6. As can be seen, the measurement is presented as the force experienced by the probe against time elapsed. This emulates the compression from a first bite, followed by a second bite at the same location and is a well-established technique. With reference to Figure 6, $L_1$ corresponds to the period during the test in which the probe is moving in the downward direction during the first compression and there is a force measured. $L_2$ corresponds to the period during the test in which the probe is moving in the upward direction during the first compression and a force is measured. $L_4$ corresponds to the period during the test in which the probe is moving in the downward direction during the second compression and a positive force is measured. $L_5$ corresponds to the period during the test in which the probe is moving in the upward direction during the second compression and a positive force is measured.

The first parameter of interest from this measurement is the hardness. This is the peak force of the first compression of the sample. This need not correspond to the point of deepest compression. In the present work, this has also been normalised relative to the area of the sample upon which the platen acts to give a stress value. This value indicates the amount of resistance a tooth would encounter during a biting action. As noted above, a higher stress value can increase the risk of tooth fracture.

The second parameter of interest is cohesiveness. This is a measure of work during the second compression relative to the work during the first compression:

$$Cohesiveness = \frac{A_3}{A_1}$$

Cohesiveness therefore represents how well the product withstands a second deformation relative to how it behaved under the first deformation and so is a good indication of the ability of the sample to maintain a resistance to subsequent bites and offer a continuing cleaning action for the animal's teeth.

The third parameter of interest is the instantaneous recoverable springiness (IRS), which is a measure of the springback during the first compression:

$$IRS = \frac{L_2}{L_1}$$

IRS is therefore indicative of the springiness of the sample directly after the compressive downstroke.

The fourth parameter is the retarded recoverable springiness (RRS), which is a measure of how well the product physically springs back after it has been deformed during the first compression. The springback is measured at the downstroke of the second compression relative to the first compression:

$$RRS = \frac{L_4}{L_1}$$

Therefore, RRS is indicative of the amount of springback before the second compressive downstroke.

The fifth parameter is the resilience, which is a measure of the area during withdrawal of the first compression relative to the area during the first compressive down stroke:

$$Resilience = \frac{A_5}{A_4}$$

The resilience is indicative of how much work the sample does in trying to regain its original shape, and so is another indication of the instantaneous springiness of the sample.

The characteristics of the chew are preferably measured 56 days after the manufacture thereof, during which time each chew remains individually sealed in a sealed sachet which is held at ambient temperature (22°C).

The invention is further illustrated by the following examples. It will be appreciated that the examples are for illustrative purposes only and are not intended to limit the invention as described above. Modification of detail may be made without departing from the scope of the invention.

## Examples

Example 1

An chew according to the present invention was produced using the recipe in Table 1.

**Table 1**

|  | Material | Total Recipe wt % | Powders wt% |
|---|---|---|---|
| Powders | Wheat flour | 14.600 | 19.614 |
|  | Maize starch | 39.321 | 52.860 |
|  | Potato starch | 10.640 | 14.298 |
|  | Maltodextrins | 1.300 | 1.747 |
|  | Poultry liver powder | 3.000 | 4.032 |
|  | Minerals | 5.54 | 7.45 |
|  | **Total Powders** | **74.400** | **100.000** |
| Colours | Carmine | 0.0006 |  |
|  | Malt Flour | 0.017 |  |
| Liquids | Glycol | 1.14 |  |
|  | Glycerol | 11.528 |  |
|  | Water | 12.554 |  |
|  | **Total Liquids** | **25.222** |  |
| Flavours | Flavouring | 0.36 |  |

(continued)

| | Material | Total Recipe wt % | Powders wt% |
|---|---|---|---|
| | **Total Recipe** | **100.00000** | |

The chew was produced using a Bühler 62 mm single-screw extruder with 7 barrels, operating at a screw speed of 245 rpm, providing a specific mechanical energy of 85 W h kg$^{-1}$ and a product throughput of 255 kg hr$^{-1}$. The powders were introduced into the first barrel and the liquids were introduced into the second barrel. The third, fourth and fifth barrels are the cooking zone. A vacuum of 0.53 mbar is applied to the sixth barrel. The seventh barrel is the end barrel with a single lane nozzle for extruding one rope of extrudate. The resulting extrudate was cut into chews of 80g in weight and 135 mm in length.

Example 2

An adapted procedure was used to produce 400 chews of the present invention. All of the procedures were the same as recited for Example 1 unless otherwise noted. The powders of the recipe listed above (excluding the maltodextrin) were added to the first barrel of the extruder at a rate of 184 kg hr$^{-1}$ along with maltodextrin at a rate of 8 kg hr$^{-1}$. In contrast to the recipe of Example 1, the only liquids added into the second barrel was glycerol at a rate of 21 kg hr$^{-1}$, water at a rate of 32 kg hr$^{-1}$ and glycol at a rate of 10 kg hr$^{-1}$. This gave a powder-to-liquid ratio of 75:25. The temperature and pressure in the seventh barrel were measured to be 112 °C and 20 bar respectively. The properties of the resulting chews were measured on the day after manufacture and are shown in Table 2.

**Table 2**

| Aw | Moisture / wt% water | 6mm probe / kgf | Repeat three point bending | CGA / kgf |
|---|---|---|---|---|
| 0.566 | 11.94 | 39.489 | 17.79% | 1.218 |

Example 3

Another adapted procedure was used to produce a further batch of samples of the present invention. All of the procedures were the same as recited for Example 1 unless otherwise noted. The screw extruder was operated at 210 rpm supplying a specific mechanical energy of 81-83 W h kg$^{-1}$. The torque was measured at 45%. The powders of the recipe listed above were added to the first barrel of the extruder at a rate of 192 kg hr$^{-1}$. In contrast to the recipe of Example 1, the only liquids added into the second barrel was glycol at a rate of 3 kg hr$^{-1}$, glycerol at a rate of 30 kg hr$^{-1}$, and water at a rate of 33 kg hr$^{-1}$, giving a total throughput of 258 kg hr$^{-1}$. The temperature of the first barrel was measured to be 49°C, the second barrel 108°C, the third barrel 109°C, the fifth barrel 110°C, the sixth barrel 119°C and the seventh barrel 115°C. The pressure in the seventh barrel was measured as 6.8 bar. The vacuum applied to the sixth barrel was 0.57 mbar. The extrudate was cut into individual chews with an average weight of 81 g and an average length of 135 mm. The resulting properties of these chews were tested on the day of manufacture and are shown in Table 3.

**Table 3**

| Aw | Moisture / wt% water | 6mm probe / kgf | Repeat three point bending | CGA / kgf |
|---|---|---|---|---|
| 0.606 | 14.29 | 29.137 | 12.17% | 3.543 |

Example 4

An edible animal chew of the invention was produced according to the recipe in Table 4.

**Table 4**

| Material | Example 4 Recipe / wt% |
|---|---|
| Wheat Flour | 14.584% |
| Maize Starch | 39.277% |
| Potato starch | 10.628% |

(continued)

| Material | Example 4 Recipe / wt% |
|---|---|
| Maltodextrin | 1.299% |
| Poultry liver powder | 2.997% |
| Minerals | 5.53% |
| Propylene Glycol | 1.18% |
| Glycerol | 11.69% |
| Water | 12.81% |

Powders make up 74.32 wt% of the above recipe. The screw extruder was operated at 177.5 rpm supplying a specific mechanical energy of 369.6 kJ kg$^{-1}$. The torque was measured at 46%. The powders of the recipe listed above were added to the first barrel of the extruder at a rate of 119.5 kg hr$^{-1}$. Glycol was added at a rate of 1.9 kg hr$^{-1}$, glycerol at a rate of 18.8 kg hr$^{-1}$, and water at a rate of 20.6 kg hr$^{-1}$. The temperature of the second barrel was measured to be 51°C, the third barrel 100°C, the fourth barrel 106°C, the fifth barrel 108°C, the sixth barrel 98°C and the seventh barrel 102°C. The vacuum applied to the sixth barrel was 0.5 bar. The properties of this chew are shown in Table 5 below.

**Table 5**

| | Hardness (kg) | Stress (kg mm$^{-2}$) | IRS | RRS | Cohesiveness | Resilience | Density (g cm$^{-3}$) |
|---|---|---|---|---|---|---|---|
| **Ex. 4 chew** | 138.80 | 0.164 | 0.516 | 0.758 | 0.643 | 0.209 | 0.628 |

Example 5

An animal chew of the invention was produced according to the recipe shown in Table 6.

**Table 6**

| Material | Example 5 Recipe / wt% |
|---|---|
| Soft Wheat Flour | 14.930% |
| Maize Starch | 40.211 % |
| Potato starch | 10.881 % |
| Maltodextrin | 1.329% |
| Poultry liver powder | 3.068% |
| Minerals | 5.66% |
| Propylene Glycol | 1.21% |
| Glycerol | 11.35% |
| Water | 11.35% |

Powders make up 76.08 wt% of the above recipe. The screw extruder was operated at 156.9 rpm supplying a specific mechanical energy of 302.5 kJ kg$^{-1}$. The torque was measured at 40%. The powders of the recipe listed above were added to the first barrel of the extruder at a rate of 119.3 kg hr$^{-1}$. Glycol was added at a rate of 1.9 kg hr$^{-1}$, glycerol at a rate of 17.8 kg hr$^{-1}$, and water at a rate of 17.8 kg hr$^{-1}$. The temperature of the second barrel was measured to be 49°C, the third barrel 99°C, the fourth barrel 99°C, the fifth barrel 97°C, the sixth barrel 95°C and the seventh barrel 97°C. The vacuum applied to the sixth barrel was 0.5 bar. The properties of the chew are shown in Table 7 below.

**Table 7**

| | Hardness (kg) | Stress (kg mm$^{-2}$) | IRS | RRS | Cohesiveness | Resilience | Density (g cm$^{-3}$) |
|---|---|---|---|---|---|---|---|
| **Ex. 5 chew** | 114.05 | 0.121 | 0.587 | 0.809 | 0.632 | 0.205 | 0.601 |

Example 6

Twenty three different samples were made using a range of powder-to-liquid ratios, liquid compositions and process parameters. The composition of the powder portion was the same as for Example 1, while the liquid portion (flavour, glycol, water and glycerol) was added to the powders in the amounts given in Table 8. The amount of the flavour component was 0.001163 wt% in all cases. The range of samples shows excellent cohesiveness.

**Table 8**

| Sample | Screw Speed / rpm | Vacuum / bar | Barrel 7 temp /°C | Extrudate temp /°C | Powders / wt fraction | Glycol /wt fraction | Water / wt fraction | Glycerol / wt fraction | Density /g cm⁻³ | IRS | RRS | Cohesiveness | Resilience | Stress / kg mm-2 |
|---|---|---|---|---|---|---|---|---|---|---|---|---|---|---|
| N1 | 167 | 0.46 | 96 | 111 | 0.766078 | 0.023191 | 0.113937 | 0.095635 | 0.646708 | 0.657 | 0.866 | 0.637 | 0.248 | 0.15 |
| N2 | 207.2 | 0.46 | 97 | 113 | 0.765846 | 0 | 0.108289 | 0.124703 | 0.471655 | 0.548 | 0.851 | 0.6 | 0.174 | 0.087 |
| N3 | 207.6 | 0.46 | 95 | 113 | 0.722594 | 0.023277 | 0.147503 | 0.105462 | 0.68688 | 0.811 | 0.91 | 0.629 | 0.303 | 0.117 |
| N4 | 207.6 | 0.46 | 95 | 105 | 0.756502 | 0 | 0.146912 | 0.095426 | 0.550749 | 0.754 | 0.908 | 0.635 | 0.252 | 0.114 |
| N5 | 207.1 | 0.46 | 96 | 113 | 0.7324 | 0.023247 | 0.108567 | 0.134624 | 0.644757 | 0.753 | 0.911 | 0.618 | 0.264 | 0.132 |
| N6 | 167.2 | 0.66 | 96 | 116 | 0.754839 | 0 | 0.119728 | 0.124275 | 0.712397 | 0.695 | 0.892 | 0.601 | 0.221 | 0.2 |
| N7 | 168.2 | 0.66 | 96 | 110 | 0.755984 | 0 | 0.147211 | 0.095643 | 0.718508 | 0.723 | 0.894 | 0.585 | 0.227 | 0.215 |
| N8 | 207.2 | 0.66 | 96 | 111 | 0.765107 | 0.0233 | 0.114509 | 0.095919 | 0.475457 | 0.454 | 0.807 | 0.579 | 0.155 | 0.054 |
| N9 | 206.8 | 0.66 | 96 | 117 | 0.722596 | 0 | 0.141542 | 0.134698 | 0.766858 | 0.76 | 0.892 | 0.618 | 0.279 | 0.194 |
| N10 | 167.8 | 0.46 | 115 | 111 | 0.76598 | 0 | 0.108406 | 0.124454 | 0.518098 | 0.642 | 0.869 | 0.617 | 0.206 | 0.107 |
| N11 | 167.4 | 0.46 | 116 | 105 | 0.722983 | 0.023249 | 0.147275 | 0.10533 | 0.72475 | 0.775 | 0.872 | 0.638 | 0.337 | 0.108 |
| N12 | 167.9 | 0.46 | 116 | 107 | 0.755383 | 0 | 0.147608 | 0.095844 | 0.578034 | 0.731 | 0.884 | 0.638 | 0.269 | 0.109 |
| N13 | 167.6 | 0.46 | 116 | 108 | 0.732689 | 0.02333 | 0.107994 | 0.134821 | 0.749391 | 0.777 | 0.896 | 0.63 | 0.294 | 0.162 |
| N14 | 207.6 | 0.46 | 116 | 108 | 0.765201 | 0.023234 | 0.114975 | 0.09543 | 0.443711 | 0.554 | 0.847 | 0.624 | 0.184 | 0.043 |
| N15 | 207.9 | 0.46 | 115.6 | 104 | 0.722769 | 0 | 0.141512 | 0.134556 | 0.554349 | 0.783 | 0.906 | 0.626 | 0.264 | 0.08 |
| N16 | 168.1 | 0.66 | 115.9 | 109 | 0.765029 | 0.023303 | 0.114647 | 0.095856 | 0.568702 | 0.577 | 0.867 | 0.619 | 0.205 | 0.106 |
| N17 | 168.1 | 0.66 | 116 | 115 | 0.723167 | 0 | 0.141379 | 0.134292 | 0.8562 | 0.793 | 0.902 | 0.591 | 0.284 | 0.193 |
| N18 | 208.1 | 0.66 | 116 | 104 | 0.76563 | 0 | 0.137499 | 0.095708 | 0.520489 | 0.62 | 0.867 | 0.601 | 0.191 | 0.093 |
| N19 | 208.11 | 0.66 | 116 | 112 | 0.732644 | 0.02321 | 0.147389 | 0.095596 | 0.602251 | 0.762 | 0.891 | 0.634 | 0.279 | 0.103 |
| N20 | 208.9 | 0.66 | 115 | 114 | 0.722355 | 0.02329 | 0.118324 | 0.134867 | 0.68376 | 0.737 | 0.89 | 0.624 | 0.266 | 0.151 |
| N21 | 187.3 | 0.56 | 105 | 109.5 | 0.744895 | 0.011608 | 0.127689 | 0.114647 | 0.64877 | 0.721 | 0.885 | 0.629 | 0.257 | 0.146 |
| N22 | 187.5 | 0.56 | 106 | 111 | 0.744357 | 0.01161 | 0.127884 | 0.114988 | 0.643587 | 0.707 | 0.879 | 0.65 | 0.27 | 0.147 |
| N23 | 187.11 | 0.56 | 107 | 108 | 0.745225 | 0.011576 | 0.12754 | 0.114502 | 0.641582 | 0.76 | 0.901 | 0.625 | 0.265 | 0.141 |

Texture Profile Analysis comparisons

The unique region of texture space that has been achieved by the present invention is demonstrated in the Texture Profile Analysis measurements of the inventive chews and commercially available prior art chews, as presented in Table 9 below.

**Table 9**

| | Hardness (kg) | Stress (kg/mm$^2$) | IRS | RRS | Cohesiveness | Resilience | Density (g/cm$^3$) |
|---|---|---|---|---|---|---|---|
| **Invention Ex. 1** | 174.25 | 0.177 | 0.520 | 0.771 | 0.657 | 0.232 | 0.644 |
| **Invention Ex. 4** | 138.80 | 0.164 | 0.516 | 0.758 | 0.643 | 0.209 | 0.628 |
| **Invention Ex. 5** | 114.05 | 0.121 | 0.587 | 0.809 | 0.632 | 0.205 | 0.601 |
| **Pets At Home Dental Sticks** | 68.00 | 0.354 | 0.308 | 0.679 | 0.273 | 0.097 | 1.254 |
| **Bakers Dental Delicious** | 41.61 | 0.188 | 0.648 | 0.830 | 0.482 | 0.206 | 1.286 |
| **Ultima Interdental (Young)** | 53.79 | 0.249 | 0.620 | 0.756 | 0.306 | 0.176 | 1.320 |
| **Ultima Interdental (Old)** | 58.69 | 0.271 | 0.606 | 0.778 | 0.229 | 0.157 | 1.320 |
| **Sainsburys Dental Sticks** | 40.76 | 0.287 | 0.231 | 0.541 | 0.258 | 0.079 | 1.379 |
| **Misfits Nasher Sticks (Chicken)** | 62.23 | 0.467 | 0.276 | 0.572 | 0.395 | 0.122 | 1.396 |
| **Misfits Nasher Sticks (Beef)** | 73.04 | 0.549 | 0.307 | 0.611 | 0.421 | 0.133 | 1.396 |
| **Pedigree® chew B** | 79.78 | 0.453 | 0.357 | 0.626 | 0.353 | 0.125 | 1.373 |
| **Pedigree® chew C** | 116.88 | 0.847 | 0.230 | 0.552 | 0.459 | 0.125 | 1.430 |
| **Pets At Home Jumbo Chew** | 187.25 | 0.290 | 0.517 | 0.699 | 0.477 | 0.191 | 1.300 |
| **Bakers Meaty Twists** | 221.65 | 0.394 | 0.668 | 0.849 | 0.569 | 0.253 | 1.261 |
| **Pork Crackers** | 23.35 | 0.023 | 0.160 | 0.247 | 0.174 | 0.075 | 0.091 |
| **Pedigree® chew A** | 38.13 | 0.237 | 0.449 | 0.746 | 0.474 | 0.159 | 1.050 |

Rebound measurement comparisons

Rebound measurements as described above were performed on a range of commercially available dog chews to assess the relative performance of edible animal chews of the present invention. The following samples were tested: a chew of the present invention (example 1), Hills t/d (a specialist dental dry main meal diet), Pedigree® Dentastix, Pedigree® JumBone (Large Dog size), Chewy Bar, Pedigree® Twisters, Pets at Home Dental Bites, Tesco Dental Sticks, Bakers Dental Delicious, and Bakers Meaty Twists. Each chew was tested using the measurement methods described above, and the data are presented in Table 10 (along with their standard errors).

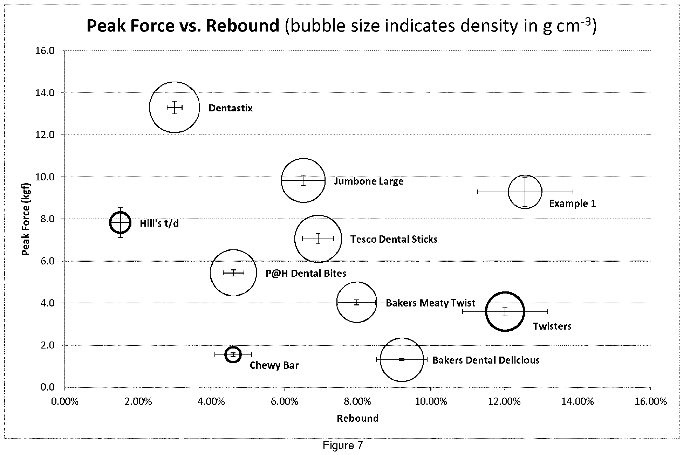

The variation of relative rebound with peak force is illustrated in Figure 7. Both relative rebound and peak force characterise the texture of the measured samples. It will be appreciated from Figure 7 that the chew of the present invention occupies a distinct texture space relative to prior art samples. It is this unique texture that results in the increased ability of the chew of the present invention to maintain the oral health of animals. In particular, the high relative rebound combined with a relatively high peak force leads to an increased amount of teeth cleaning when the chew of the present invention is consumed by an animal.

**Table 10**

| Sample | Peak Force (kgf) | SE (PF) | Insertion Energy (kgf mm) | SE (IE) | Rebound (kgf mm) | SE (Re) | % Rebound | SE (%Re) | Grip Energy (kgf mm) | Density (g cm⁻³) |
|---|---|---|---|---|---|---|---|---|---|---|
| Dentastix | 13.3 | 0.31 | 92.6 | 0.06 | 2.8 | 0.19 | 2.99% | 0.20% | 11.10 | $>1.0$ |
| Example 1 | 9.3 | 0.71 | 43.4 | 0.21 | 5.5 | 0.57 | 12.57% | 1.30% | 3.91 | $<1.0$ |
| Bakers Dental Delicious | 1.3 | 0.05 | 10.0 | 0.03 | 0.9 | 0.07 | 9.20% | 0.69% | 1.02 | $>1.0$ |
| P@H Dental Bites | 5.4 | 0.15 | 38.3 | 0.05 | 1.8 | 0.11 | 4.61% | 0.28% | 4.86 | $>1.0$ |
| Tesco Dental Sticks | 7.1 | 0.24 | 44.3 | 0.07 | 3.1 | 0.19 | 6.92% | 0.43% | 6.05 | $>1.0$ |
| Bakers Meaty Twist | 4.0 | 0.12 | 28.0 | 0.04 | 2.2 | 0.15 | 7.97% | 0.52% | 6.02 | $>1.0$ |
| Jumbone Large | 9.8 | 0.25 | 68.1 | 0.06 | 4.4 | 0.41 | 6.51% | 0.59% | 10.17 | $>1.0$ |
| Twisters | 3.6 | 0.20 | 16.5 | 0.88 | 2.0 | 0.16 | 12.02% | 1.16% | 0.439 | $>1.0$ |
| Chewy Bar | 1.5 | 0.10 | 10.8 | 0.76 | 0.5 | 0.04 | 4.60% | 0.50% | 1.0468 | $<1.0$ |
| Hill's t/d | 7.8 | 0.70 | 44.7 | 4.77 | 0.7 | 0.09 | 1.52% | 0.25% | 0.878 | $<1.0$ |

The data presented in the Tables above demonstrate that the chew of the present invention exhibits a particularly high cohesiveness, beyond that achieved in currently available chews. This high cohesiveness is associated with improved efficacy, as detailed below.

The inventors have concluded that the surprisingly high cohesiveness is achieved by the unique composition of the chew of the present invention. In particular, it is considered that the presence of potato starch is particularly effective at producing the unique texture. This can be appreciated by comparing the starch-contributing components utilised in the prior art compared to those used in the present invention:

Pedigree® chew "A" (commercially available) contains starch contributions from soya flour (42 wt% of the total recipe) and durum wheat flour (35 wt% of the total recipe).

Pedigree® chew "B" (commercially available) contains starch contributions from rice flour (20 wt% of total recipe), rice pieces (19% of the total recipe), wheat starch (16 wt% of the total recipe), tapioca starch (3 wt% of the total recipe) and wheat durum flour (3 wt% of the total recipe).

Pedigree® chew "C" (commercially available) contains starch contributions from maize flour (38 wt% of total recipe) and wheat starch (21 wt% of the total recipe).

It can be appreciated that the present invention is distinguished from commercially available chews by containing potato starch as part of the starch component. In particular, the chews of the invention contain potato starch and a high degree of starch gelatinisation contributing to the unique texture of the chew of the present invention.

Lasting time

The lasting times of animal chews of the present invention were measured for different product sizes and different dog sizes.

A "pre-feeding" trial was first carried out in order to assess whether the dog finds the product acceptable and palatable. Any animal which refuses to eat the product, or only eats a part of the product, is not included in the main feeding test. No lasting times are measured at this pre-feeding stage. Two days after this pre-feeding trial, each animal which accepted and ate the product in the pre-feeding trial is tested as follows.

A product is given to the animal and timing is started. The timing is stopped if the animal stops eating the product at any stage. The timing is then restarted when the animal resumes eating the product. The lasting time is the total recorded time (i.e. the total time spent chewing the product) as soon as the final pieces of the product have been consumed. The average total eating time for the animal chew of the present invention are given in Table 11. 'Small' dogs are classified as those weighing 5-10kg, 'Medium' dogs are those weighing 10-25kg and 'Large' dogs are those weighing greater than 25kg.

**Table 11**

| Dog size | Number of Dogs | Product weight (9) | Average Lasting time (secs) |
|---|---|---|---|
| Small | 12 | 56 | 540 |
| Medium | 13 | 80 | 309 |
| Medium | 33 | 102 | 370 |
| Large | 8 | 160 | 601 |

The lasting time of the chew of Example 1 was also measured and compared to a Pedigree Jumbone®. The results shown in Table 12 demonstrate an increased lasting time compared to this prior art product.

**Table 12**

| Sample | Product weight (g) | Lasting Time (secs) | Lasting time (secs/gram) |
|---|---|---|---|
| Inventive example 1 | 80 | 360 | 4.5 |
| Pedigree JumBone | 100 | 150 | 1.5 |

Dental Efficacy Trial 1

A product in accordance with the invention was manufactured to three different sizes, and tested for dental efficacy as outlined below.

*Materials and Methods*

Twelve dogs completed the study, 5 small, 4 medium and 3 large breed dogs. Animal details are presented in Table 13 below.

**Table 13**

| No. | Breed | Sex | | Age (yrs) | Weight (kg) |
|---|---|---|---|---|---|
| 1 | *Tibetan Spaniel* | F | *entire* | 3 | 7.3 |
| 2 | *West Highland terrier* | F | *desexed* | 6 | 8.1 |
| 3 | *Cairn terrier* | F | *desexed* | 8 | 5.6 |
| 4 | *Cairn terrier* | F | *entire* | 8 | 5.7 |
| 5 | *Australian terrier* | F | *entire* | 1.5 | 6.1 |
| 6 | *Beagle* | F | *entire* | 3 | 12.5 |
| 7 | *Beagle* | F | *entire* | 3 | 12.5 |
| 8 | *Beagle* | F | *entire* | 7 | 13.1 |
| 9 | *Beagle* | F | *entire* | 5 | 12.0 |
| 10 | *Greyhound* | F | *entire* | 6 | 26.4 |
| 11 | *Greyhound* | F | *entire* | 7 | 32.1 |
| 12 | *Greyhound* | F | *entire* | 7 | 29.3 |

*Study Design*

A clean tooth model was used to evaluate the chew according to the present invention (fed twice weekly) against a control (dogs fed the same diet with no chew (also referred herein as a "treat")) using a cross-over study design. There were 2 treatment periods; each period consisted of a 2-week baseline phase, followed by a 4-week test phase. During the baseline phase, all dogs were fed the standard diet, and their teeth were brushed daily. At the conclusion of the baseline phase, baseline gingivitis scores for each dog were recorded under general anaesthesia, and teeth were scaled and polished to provide a clean tooth surface. The 4-week test phase followed, during which each dog was fed the standard diet, with or without the chew of the present invention. At the conclusion of the test phase, dogs were anaesthetised and dental scoring procedures performed to quantify the extent of gingivitis and accumulation of dental deposits. Teeth were then scaled and polished to provide a clean tooth surface in preparation for the next period. Dogs receiving the chew of the present invention in the first period received no product in the second period (and vice versa).

The standard diet was a complete and balanced commercial dog food (Advance Adult) fed as a combination of dry and tinned food in a ratio of 1:2 by weight. Animals were fed maintenance energy requirements (MER) as determined by the formula MER (kcal) = 140 x BW(kg)$^{075}$, where BW is the bodyweight of the dog, once daily in the afternoon, and any refusals were weighed and recorded. Bodyweights were measured fortnightly, and amounts fed were adjusted as necessary to maintain ideal bodyweights.

During the 4-week test phase, dogs were fed the standard diet alone (Control), or the standard diet supplemented with a chew of the present invention twice weekly (Mondays and Thursdays). Treats were fed in the morning and any instances of refusals were weighed and recorded. The allocation of animals to treatments is shown in Table 14.

The chews of the present invention were supplied in three sizes: small, medium and large. The 5 small dogs were fed the small products, beagles were fed the medium products, and greyhounds received the large products. Diets were reduced accordingly to compensate for the energy value of the chews of the present invention when these were fed. Standard diet and test products made up the sole nutrient intake of the dogs during the experiment.

**Table 14: Dog Allocation by Phase**

| Dog No | Size | Phase 1 | Phase 2 |
|---|---|---|---|
| 1 | Small | Control | Chew |
| 2 | Small | Control | Chew |

(continued)

| Dog No | Size | Phase 1 | Phase 2 |
|--------|--------|---------|---------|
| 3 | Small | Chew | Control |
| 4 | Small | Control | Chew |
| 5 | Small | Chew | Control |
| 6 | Medium | Control | Chew |
| 7 | Medium | Control | Chew |
| 8 | Medium | Chew | Control |
| 9 | Medium | Chew | Control |
| 10 | Large | Chew | Control |
| 11 | Large | Control | Chew |
| 12 | Large | Control | Chew |

*Dental Scoring Measurements*

Dental scoring procedures were conducted under general anaesthesia. Dogs were first premedicated with a subcutaneous injection of Anamav (acepromazine and atropine). General anaesthesia was then induced with Alfaxan (IV) and maintained with a mixture of oxygen and Isoflourane via a cuffed endotracheal tube.

The following 22 teeth were assessed for oral health measurements:

Right and Left Maxilla: I3, C, P2, P3, P4, and M1
Right and Left Mandible: C, P2, P3, P4, and M1
(I = incisor, C = canine, P = pre-molar, M = molar)

*A. Gingivitis Scoring Method*

The buccal gingiva for each tooth is visually divided vertically into thirds (mesial, buccal and distal). Each site is assigned a score based on the following criteria:

0 - No gingivitis, pink (or pigmented) healthy gingiva, no inflammation, no bleeding on probing
1 - Slight inflammation (slight redness, but no bleeding on probing)
2 - Mild inflammation (mild redness and swelling; delayed bleeding on gentle probing)
3 - Moderate inflammation (red, swollen and immediate bleeding on probing)
4 - Severe inflammation (red to reddish-blue, ulceration, spontaneous haemorrhage, profuse

*B. Plaque Scoring Method*

Plaque is disclosed on the teeth by applying an undiluted disclosing solution (Mira-2-ton) to the buccal surface and immediately rinsing with water. Each tooth is divided horizontally using anatomical markers into coronal and gingival sections. Each part of the tooth crown (coronal and gingival) is successively covered and plaque coverage and thickness is assessed on the uncovered part using a dye reference solution colour palette, and on the basis of the criteria below. The shade that is closest to that on the disclosed surface is designated as the thickness score.

Coverage:
0 - No observable plaque
1 - 1-24% coverage
2 - 25-49% coverage
3 - 50-74% coverage
4 - 75-100%

Thickness:
1 - Light = pink
2 - Medium = red
3 - Heavy = purple

The coverage score is then multiplied by the intensity factor (thickness) to give a gingival and coronal score for each tooth. The gingival and coronal values for each tooth are added together to obtain a tooth total. The mean tooth score for each dog is the mean score for all teeth scored.

*C. Calculus Scoring Method*

Plaque is removed using a soft toothbrush and water, and the remaining calculus is air-dried. The buccal surface of each tooth is visually divided horizontally into coronal and gingival sections and each section assigned a numerical score for both coverage and thickness using the criteria given below. A probe is used gently to verify the visual impression of cover and thickness. Teeth are then scaled and polished.

Coverage:
0 - No observable calculus
1 - 1-24% coverage
2 - 25-49% coverage
3 - 50-74% coverage
4 - 75-100%

Thickness:
1 - Light (<0.5 mm)
2 - Moderate (0.5-1.0 mm)
3 - Heavy (>1.0 mm)

The coverage score is then multiplied by the thickness score for each tooth surface. The tooth score is the sum of the scores for each of the three tooth surfaces. The sum of the teeth scores is averaged to obtain a whole mouth mean calculus score for each animal.

*Chew consumption times*

In the final 2 weeks of each test phase, on days 16, 20 and 23; dogs receiving the chew of the present invention for that phase were filmed eating the treats. The total number of bites taken, and the time required to consume the treats, were determined from the recordings.

*Results*

Chews of the present invention were fed on the predetermined dates to the designated dogs and there were no refusals.

*Analysis of dental score data*

Dental score data were initially screened for normality of data distribution using Staview II (Abacus Concepts, Berkley, CA, USA). No variables required transformation. Data were then subjected to analysis of variance appropriate to a crossover design using Super ANOVA (Abacus Concepts, Berkley, CA, USA). The effects fitted in the model were Dog ($n$=12), Period ($n$=2) and Treatment ($n$=2). To examine the effect of dog breed/size, a separate analysis was conducted with Breed ($n$=3), Period ($n$=2) and Treatment ($n$=2) fitted as effects. No interactions were fitted as the experimental design does not allow detection of interaction between the main effects. Where the effect of treatment was significant ($P < 0.05$), the significance of differences between individual treatment means was determined using Duncan's new Multiple Range test in the Super ANOVA program. A significance level of $P < 0.05$ is used throughout.

Analysis of variance revealed a significant effect of dog ($P = 0.006$), treatment ($P = 0.0001$) and breed ($P = 0.002$) on gingivitis scores, but no effect of phase. The addition of chew of the present invention twice each week resulted in significantly less gingivitis compared with dogs fed the same diet but no Chew (Table 15). Mean gingivitis scores for individual dogs ranged from 0.35 to greater than 3.0.

**Table 15: Mean tooth scores for Gingivitis**

| Treatment | Gingivitis Score |
|---|---|
| Control (no treat) | 2.69 |
| Inventive Chew | 1.27 |
| *P value* | 0.0001 |

Analysis of variance revealed a significant effect of treatment (P < 0.001) on plaque scores, but no effect of phase, breed or dog. Dogs that received the chew of the present invention twice a week had significantly less plaque than dogs fed the same diet but receiving no treat (Table 16).

**Table 16: Mean tooth scores for Plaque**

| Treatment | Plaque Score |
|---|---|
| Control (no treat) | 11.40 |
| Inventive Chew | 5.81 |
| *P value* | 0.0004 |

Analysis of variance revealed a significant effect of treatment (P < 0.001) on calculus scores, but no effect of phase, breed or dog. Dogs receiving a twice-weekly chew of the present invention had significantly less calculus than dogs fed the same diet that received no treat (Table 17).

**Table 17: Mean tooth scores for Calculus**

| Treatment | Calculus Score |
|---|---|
| Control (no treat) | 2.96 |
| Inventive Chew | 0.66 |
| *P value* | 0.0001 |

Analysis of variance revealed a significant reduction in plaque, at both the gingival ($P < 0.001$) and coronal ($P < 0.001$) tooth sections, when dogs were fed a single chew of the present invention twice weekly compared with when dogs were fed no treat (Table 18).

**Table 18: Mean tooth scores for Gingival and Coronal Plaque**

| Treatment | Gingival | Coronal |
|---|---|---|
| Control (no treat) | 2.06 | 0.90 |
| Inventive Chew | 0.43 | 0.25 |
| *P value* | 0.0001 | 0.0004 |

Individual consumption times ranged from 3.1 to 24 minutes and required between 325 and 2151 bites. Group mean averages are presented in Tables 19 and 20.

**Table 19: Average Times to consume Inventive Chew**

| Breed | Consumption time (mins) , mean $\pm$ SD |
|---|---|
| Small (n = 5) | 6.3 $\pm$ 3.1 |
| Medium (n = 4) | 7.8 $\pm$ 1.9 |
| Large (n = 3) | 16.6 $\pm$ 6.0 |
| All dogs | 9.4 $\pm$ 5.5 |

**Table 20: Average Number of Bites to consume Inventive Chew**

| Breed | Number of Bites mean $\pm$ SD |
|---|---|
| Small (n = 5) | 652 $\pm$ 303 |
| Medium (n = 4) | 805 $\pm$ 250 |
| Large (n = 3) | 1580 $\pm$ 508 |

(continued)

| Breed | Number of Bites mean $\pm$ SD |
|---|---|
| All dogs | 935 $\pm$ 503 |

Dental efficacy trial 2 (comparative)

The dental efficacy of a commercially available unexpanded chew (starch contributions from maize flour and wheat starch) was tested with a panel of 16 dogs, 8 small and 8 medium in size. The products fed were selected to suit the dog sizes. Efficacy was determined by measuring the impact on dental health parameters (plaque, gingival plaque and calculus) in dogs fed a standard diet with and without the dental treat in a 2-period cross-over design.

A clean tooth model was used to evaluate the dental chew (fed daily) against a control (dogs fed the same diet with no dental chew) using a cross-over study design. There were 2 treatment periods; each period consisted of a 2-week baseline phase, followed by a 4-week test phase. During the baseline phase, all dogs were fed the standard diet, and their teeth were brushed daily. At the conclusion of the baseline phase, teeth were scaled and polished to provide a clean tooth surface. The 4-week test phase followed, during which each dog was fed the standard diet, with or without the dental treat. At the conclusion of the test phase, dogs were anaesthetised and dental scoring procedures performed to quantify the extent of accumulation of dental deposits. Teeth were then scaled and polished to provide a clean tooth surface in preparation for the next period. Dogs receiving the dental chew in the first period received no product in the second period (and vice versa).

*Diet and Test Products*

The standard diet was a complete and balanced commercial dog food fed as a combination of dry and tinned food in a ratio of 1:2 by weight. During the 4-week test phase, dogs were fed the standard diet alone (Control), or the standard diet supplemented with the dental treat. The dental chews were supplied in two sizes: small and medium. Dogs below 10kg body weight were fed the small products, dogs above 10kg were fed the medium products. Diets were reduced accordingly to compensate for the energy value of the test products when these were fed. Standard diet and test products made up the sole nutrient intake of the dogs during the experiment.

*Dental Scoring Measurements*

Dental scoring procedures were conducted under general anaesthesia. The following 22 teeth were assessed for oral health measurements:

Right and Left Maxilla: I3, C, P2, P3, P4, and M1
Right and Left Mandible: C, P2, P3, P4, and M1
(I = incisor, C = canine, P = pre-molar, M = molar)

*A. Plaque Scoring Method*

Plaque was scored using the Quigley and Hein method as modified by Turesky (Quigley GA, Hein JW. Comparative cleaning efficiency of manual and power brushing. J Am Dent Assoc 1962;65:26-29; Turesky S, Gilmore ND, Reduced plaque formation by the chloromethyl analogue of victamine C. J Periodontol 1970;41:41-43). Plaque was disclosed by applying dental disclosing solutiong to the buccal surface of each tooth and immediately rinsing with water. The gingival and occlusal halves of each tooth were scored for plaque coverage and thickness, according to the following criteria:

Coverage:
0 - No observable plaque
1 - 1-24% coverage
2 - 25-49% coverage
3 - 50-74% coverage
4 - 75-100%

Thickness:
1 - Light = pink
2 - Medium = red
3 - Heavy = purple

The cover score is multiplied by the thickness score for each tooth surface. The tooth score is the sum of the scores for each of the two tooth surfaces. The sum of the teeth scores is averaged to obtain a whole mouth mean plaque score for each animal.

*B. Calculus Scoring Method*

Calculus was assessed using the method described by Warrick and Gorrel (Warrick J, Gorrel C. A more sensitive method of scoring calculus. In: 11th Annual Veterinary Dental Forum. 1997. Denver, USA). Disclosed plaque was first removed with a toothbrush and then rinsed from the teeth using a dental air-water syringe. Teeth were air-dried prior to assessment of the coverage and thickness of calculus deposition. The buccal surface of each tooth was visually divided vertically into mesial, buccal, and distal thirds. Each third was assigned a numerical score for both coverage and thickness. A probe was used gently to verify the visual impression of coverage and thickness.

The coverage score was multiplied by the thickness score for each of the three areas of the tooth. The "total tooth score" was calculated as the sum of the scores observed across the three areas on the tooth surface. The total tooth score across all teeth were then averaged to obtain a "mean tooth calculus score" for each animal.

*Results*

The results from the study are summarized in Table 21 below.

**Table 21**

| Indicator of periodontal health | Reference Diet | Dental Chew | Mean Treatment Effect | p= | 95% Confidence Interval |
|---|---|---|---|---|---|
| *Mean tooth calculus score* | 2.33 | 0.82 | 1.5 | 0.0003 | 0.81-2.19 |
| *Mean tooth plaque score* | 11.85 | 7.60 | 4.26 | 0.0001 | 2.53-5.99 |
| *Mean tooth gingival plaque score* | 7.43 | 5.57 | 1.86 | 0.0008 | 0.20-1.18 |

Dental efficacy trial 3

To assess dental efficacy relative to the prior art chew of dental efficacy trial 2, a product of Example 1 was tested with a panel of 12 medium sized dogs. Efficacy was determined by measuring the impact on dental health parameters (plaque, gingival plaque and calculus) in dogs fed a standard diet with and without the dental treat in a cross-over design.

A clean tooth model was used to evaluate the dental chew (fed twice weekly) against a control (dogs fed the same diet with no dental chew) using a cross-over study design. There were 2 treatment periods; each period consisted of a 4-week test phase. At the start of each test phase, teeth were scaled and polished to provide a clean tooth surface. The 4-week test phase followed, during which each dog was fed the standard diet, with or without the dental treat. At the conclusion of the test phase, dogs were anaesthetised and dental scoring procedures performed to quantify the extent of accumulation of dental deposits. Teeth were then scaled and polished to provide a clean tooth surface in preparation for the next period. Dogs receiving the dental chew in the first period received no product in the second period (and vice versa).

*Diet and Test Products*

The standard diet was a complete and balanced commercial dry dog food. During the 4-week test phase, dogs were fed the standard diet alone (Control), or the standard diet supplemented with the dental treat. The dental chews were supplied in a size suited to the dogs in the panel (12 - 18kg body weight). Diets were reduced accordingly to compensate for the energy value of the test products when these were fed. Standard diet and test products made up the sole nutrient intake of the dogs during the experiment.

*Dental Scoring Measurements*

Dental scoring procedures were conducted under general anaesthesia. The following 22 teeth were assessed for oral health measurements:

Right and Left Maxilla: I3, C, P2, P3, P4, and M1
Right and Left Mandible: C, P2, P3, P4, and M1
(I = incisor, C = canine, P = pre-molar, M = molar)

*A. Plaque Scoring Method*

Plaque was scored using the Quigley and Hein method as modified by Turesky (Quigley GA, Hein JW. Comparative cleaning efficiency of manual and power brushing. J Am Dent Assoc 1962;65:26-29; Turesky S, Gilmore ND, Reduced plaque formation by the chloromethyl analogue of victamine C. J Periodontol 1970;41:41-43). Plaque was disclosed by applying dental disclosing solution to the buccal surface of each tooth and immediately rinsing with water. The gingival and occlusal halves of each tooth were scored for plaque coverage and thickness, according to the following criteria:

| Coverage: | Thickness: |
|---|---|
| 0 - No observable plaque | 1 - Light = pink |
| 1 - 1-24% coverage | 2 - Medium = red |
| 2 - 25-49% coverage | 3 - Heavy = purple |
| 3 - 50-74% coverage | |
| 4 - 75-100% | |

The cover score is multiplied by the thickness score for each tooth surface. The tooth score is the sum of the scores for each of the two tooth surfaces. The sum of the teeth scores is averaged to obtain a whole mouth mean plaque score for each animal.

*B. Calculus Scoring Method*

Calculus was assessed using the method described by Warrick and Gorrel (Warrick J, Gorrel C. A more sensitive method of scoring calculus. In: 11th Annual Veterinary Dental Forum. 1997. Denver, USA). Disclosed plaque was first removed with a toothbrush and then rinsed from the teeth using a dental air-water syringe. Teeth were air-dried prior to assessment of the coverage and thickness of calculus deposition. The buccal surface of each tooth was visually divided vertically into mesial, buccal, and distal thirds. Each third was assigned a numerical score for both coverage and thickness. A probe was used gently to verify the visual impression of coverage and thickness.
The coverage score was multiplied by the thickness score for each of the three areas of the tooth. The "total tooth score" was calculated as the sum of the scores observed across the three areas on the tooth surface. The total tooth score across all teeth were then averaged to obtain a "mean tooth calculus score" for each animal.

*Results*

The results from the study are summarized in Table 22 below.

**Table 22**

| Indicator of periodontal health | Reference Diet | Dental Chew | Mean Treatment Effect | p= | 95% Confidence Interval |
|---|---|---|---|---|---|
| *Mean tooth calculus score* | 2.16 | 0.60 | 1.56 | 0.0001 | 0.81-2.19 |
| *Mean tooth plaque score* | 10.24 | 5.27 | 4.97 | 0.0001 | 2.53-5.99 |
| *Mean tooth gingival plaque score* | 7.09 | 4.07 | 3.02 | 0.0001 | 0.20-1.18 |

*Performance comparison*

The performance of the chew of the prior art (dental efficacy study 2) and of the invention (dental efficacy study 3) were compared. The efficacy data are expressed in Table 23 below as a % reduction in plaque, calculus and gingival plaque relative to the control diet. It can be seen that the chew of the present invention gives substantially higher reductions in these dental deposits than the chew of the prior art.

**Table 23: % Reduction versus control diet**

|  | Total Plaque | Gingival Plaque | Total Calculus |
|---|---|---|---|
| **Prior Art Chew** | 35.9 | 25.0 | 64.7 |
| **Inventive Chew** | 48.5 | 42.6 | 72.1 |

Dental efficacy trial 4

This trial involved twelve adult beagle dogs and compared the efficacy of two chews of the invention. The animals were individually housed during feeding. A base diet, *Hill's Science Diet Original* (a kibble, fed dry) was supplied to all dogs for one hour daily. The dogs were assigned equally to one of three phases, two treatment phases and one control phase. One of the treatment phases utilised the chew of Example 4 above, while the other treatment phase utilised the chew of Example 5 above. During the treatment phases, dogs received dental chews twice weekly 5 hours after receiving the base diet. Any portion not consumed was removed after two hours of being offered. Animals remained in one of two treatment phases or the control phase for twenty-eight days. After twenty eight days animals switched phases for the following twenty-eight day period. After day fifty-six, the animals switched onto the remaining phase for the following twenty-eight days. Fresh, clean drinking water was offered *ad libitum.*

Individual food consumption data was collected daily and individual body weights were measured weekly. The animals were observed twice daily for general health. Veterinary examinations were performed at trial initiation. Blood samples were collected prior to the start of the study for complete blood cell (CBC) count and biochemistry to ensure good health.

A pre-test phase of fourteen days was conducted before the initiation of the first 28-day treatment period. During the pre-test phase, the dogs were weighed and fed *Hill's Science Diet* (a kibble, fed dry) once daily. Each animal had its teeth scaled and polished upon initiation of the pre-test phase (Day -14). After this procedure a disclosing agent of 2% Eosin was applied to all test teeth and an oral examination was performed to ensure was no remaining plaque or calculus buildup. Each day during the pre-test phase, the dogs had their teeth brushed using water in order to maintain clinically healthy gingivae prior to the start of the first test phase. On Day 0, gingivitis was evaluated. Review was limited to the following teeth: upper jaw - incisor 3 (I3), canine (C), premolar 2 (P2), premolar 3 (P3), premolar 4 (P4), molar 1 (M1); lower jaw - canine (C), premolar 2 (P2), premolar 3 (P3), premolar 4 (P4), molar 1 (M1). Following gingivitis scoring on Day zero (0), teeth were scaled and polished and a disclosing agent of 2% Eosin was applied to all test teeth and an oral examination was performed to ensure was no remaining plaque or calculus buildup and a clean mouth was used for the start of the study. Each animal was anesthetized and intubated to have its teeth scaled and polished upon initiation of the pre-test phase (Day -14), Day zero (0), Day twenty-eight (28), and Day fifty-six (56). On Day zero (0), each animal was scored for gingivitis under general anesthesia and intubation. On Day twenty-eight (28), Day fifty-six (56) and Day eighty-four (84), each animal was scored for gingivitis, plaque and calculus index under general anesthesia and intubation. Teeth were scored according to the Logan & Boyce method for Plaque, Calculus and the Loe and Silness method for Gingivitis by trained personnel. One individual scored gingivitis for all time points, the opposite individual scored plaque and tartar for all time points. Technical staff scoring teeth were blind to the group assignments of the dogs. On Day zero (0) and Day eighty-four (84) the oral cavity of each dog was examined for inflammation, ulceration or laceration and findings were recorded.

The average gingivitis, plaque and tartar scores following each of the phases are shown in Table 24.

**Table 24**

| Treatment | Mean Gingivitis Score | Mean Plaque Score | Mean Tartar Score |
|---|---|---|---|
| Control (no treat) | 0.77 | 5.26 | 2.56 |
| Inventive example 4 | 0.62 | 3.31 | 0.52 |
| Inventive example 5 | 0.65 | 3.25 | 0.45 |

It can therefore be seen that both of these inventive chews resulted an improvement in oral health when fed only twice a week.

**Claims**

1.  An edible animal chew comprising

    a starch content of 50 to 75 wt % relative to the total weight of the chew;
    a humectant content of 10 to 20 wt % relative to the total weight of the chew;
    and a density of 1.0 g cm$^{-3}$ or less;
    and wherein the starch comprises a potato starch and a maize starch;
    wherein the maize starch content of the chew is from 10 to 50 wt % based on the total weight of the chew;
    and wherein the potato starch content of the chew is from 5 to 25 wt % based on the total weight of the chew.

2.  The edible animal chew according to claim 1 wherein the starch comprises less than 28 wt% amylose if less than 50 wt % of said starch is potato starch, or less than 20 wt % amylose if at least 50 wt % of the starch is potato starch.

3.  The edible animal chew according to any preceding claim, further comprising a fat content of less than 10 wt % relative to the total weight of the chew, preferably less than 5 wt% relative to the total weight of the chew.

4.  The edible animal chew according to any preceding claim, wherein the starch content has a degree of gelatinization of 75 wt % or greater on a total starch content basis.

5.  The edible animal chew according to any preceding claim, further comprising a water content of 10 to 15 wt % relative to the total weight of the chew.

6.  The edible animal chew according to any preceding claim, wherein the humectant comprises glycerol.

7.  The edible animal chew according to any preceding claim, further comprising a protein content of less than 10 wt % protein relative to the total weight of the chew.

8.  The edible animal chew according to any preceding claim, wherein the chew is nutritionally incomplete and/or the chew is suitable or adapted for contributing from about 5% to about 15% of the daily calorific intake of the animal.

9.  The edible animal chew according to any preceding claim, wherein the chew exhibits a density of at least 0.4 g cm$^{-3}$.

10. The edible animal chew according to any preceding claim, further comprising a fibre content of less than 10 wt % relative to the total weight of the chew.

11. The edible animal chew according to any preceding claim, wherein the edible animal chew is in a form having a longitudinal axis comprising: an outer wall extending in the direction of said longitudinal axis; and an internal support structure that contacts the inner surface of said outer wall at three or more points.

12. The edible animal chew according to claim 11, wherein said internal support structure defines a plurality of channels that extend in the direction of said longitudinal axis.

13. A method of producing an edible animal chew comprising the steps of:

    a. mixing ingredients comprising a starch content of 50 to 75 wt % and a humectant content of 10 to 20 wt % to form an edible animal chew mixture;
    b. gelatinizing at least a portion of the starch contained in the mixture to form an edible animal chew composition;
    c. extruding the composition out of an extruder so that it leaves the extruder at a temperature of 100°C or more; and
    d. allowing the composition to expand to a density of 1.0 g cm$^{-3}$ or less to produce the edible animal chew;

    wherein the edible animal chew comprises a potato starch and a maize starch;
    wherein the maize starch content of the chew is from 10 to 50 wt % based on the total weight of the chew;
    and wherein the potato starch content of the chew is from 5 to 25 wt % based on the total weight of the chew.

**Patentansprüche**

1. Verzehrbares Kauprodukt für Tiere, umfassend einen Stärkegehalt von 50 bis 75 Gew.-%, bezogen auf das Gesamtgewicht des Kauprodukts;

   einen Feuchthaltemittelgehalt von 10 bis 20 Gew.-%, bezogen auf das Gesamtgewicht des Kauprodukts; eine Dichte von 1,0 g cm$^{-3}$ oder weniger;
   und wobei die Stärke eine Kartoffelstärke und eine Maisstärke umfasst;
   wobei der Maisstärkegehalt des Kauprodukts 10 bis 50 Gew.-%, bezogen auf das Gesamtgewicht des Kauprodukts, beträgt;
   und wobei der Kartoffelstärkegehalt 5 bis 25 Gew.-%, bezogen auf das Gesamtgewicht des Kauprodukts, beträgt.

2. Verzehrbares Kauprodukt für Tiere nach Anspruch 1, wobei die Stärke weniger als 28 Gew.-% Amylose umfasst, wenn weniger als 50 Gew.-% der Stärke Kartoffelstärke sind, oder weniger als 20 Gew.-% Amylose umfasst, wenn mindestens 50 Gew.-% der Stärke Kartoffelstärke sind.

3. Verzehrbares Kauprodukt für Tiere nach einem der vorhergehenden Ansprüche, ferner umfassend einen Fettgehalt von weniger als 10 Gew.-%, bezogen auf das Gesamtgewicht des Kauprodukts, vorzugsweise weniger als 5 Gew.-%, bezogen auf das Gesamtgewicht des Kauprodukts.

4. Verzehrbares Kauprodukt für Tiere nach einem der vorhergehenden Ansprüche, wobei der Stärkegehalt einen Gelatinisierungsgrad von 75 Gew.-% oder mehr, bezogen auf den Gesamtstärkegehalt, aufweist.

5. Verzehrbares Kauprodukt für Tiere nach einem der vorhergehenden Ansprüche, ferner umfassend einen Wassergehalt von 10 bis 15 Gew.-%, bezogen auf das Gesamtgewicht des Kauprodukts.

6. Verzehrbares Kauprodukt für Tiere nach einem der vorhergehenden Ansprüche, wobei das Feuchthaltemittel Glycerin umfasst.

7. Verzehrbares Kauprodukt für Tiere nach einem der vorhergehenden Ansprüche, ferner umfassend einen Proteingehalt von weniger als 10 Gew.-%, bezogen auf das Gesamtgewicht des Kauprodukts.

8. Verzehrbares Kauprodukt für Tiere nach einem der vorhergehenden Ansprüche, wobei das Kauprodukt ernährungsphysiologisch unvollständig ist und/oder das Kauprodukt zum Beitragen von etwa 5 % bis etwa 15 % der täglichen Kalorienaufnahme des Tiers geeignet oder ausgelegt ist.

9. Verzehrbares Kauprodukt nach einem der vorhergehenden Ansprüche, wobei das Kauprodukt eine Dichte von mindestens 0,4 g cm$^{-3}$ aufweist.

10. Verzehrbares Kauprodukt für Tiere nach einem der vorhergehenden Ansprüche, ferner umfassend einen Fasergehalt von weniger als 10 Gew.-%, bezogen auf das Gesamtgewicht des Kauprodukts.

11. Verzehrbares Kauprodukt für Tiere nach einem der vorhergehenden Ansprüche, wobei das verzehrbare Kauprodukt für Tiere in einer eine Längsachse aufweisenden Form vorliegt, umfassend: eine Außenwand, die sich in der Richtung der Längsachse erstreckt; und eine innere Trägerstruktur, die an drei oder mehr Punkten mit der Innenfläche der Außenwand in Kontakt steht.

12. Verzehrbares Kauprodukt für Tiere nach Anspruch 11, wobei die innere Trägerstruktur eine Vielzahl von Kanälen definiert, die sich in der Richtung der Längsachse erstrecken.

13. Verfahren zur Herstellung eines verzehrbaren Kauprodukts für Tiere, umfassend die Schritte:

    a. Mischen von Inhaltsstoffen, umfassend einen Stärkegehalt von 50 bis 75 Gew.-% und einen Feuchthaltemittelgehalt von 10 bis 20 Gew.-%, um eine Mischung für ein verzehrbares Kauprodukt für Tiere zu bilden;
    b. Gelatinisieren mindestens eines Teils der in der Mischung enthaltenen Stärke, um eine Zusammensetzung für ein verzehrbares Kauprodukt für Tiere zu bilden;
    c. Extrudieren der Zusammensetzung aus einem Extruder, so dass sie mit einer Temperatur von 100 °C oder mehr aus dem Extruder austritt; und

d. Expandierenlassen der Zusammensetzung auf eine Dichte von 1,0 g cm$^{-3}$ oder weniger, um das verzehrbare Kauprodukt für Tiere zu erhalten; wobei das verzehrbare Kauprodukt für Tiere eine Kartoffelstärke und eine Maisstärke umfasst; wobei der Maisstärkegehalt des Kauprodukts 10 bis 50 Gew.-%, bezogen auf das Gesamtgewicht des Kauprodukts, beträgt;

und wobei der Kartoffelstärkegehalt 5 bis 25 Gew.-%, bezogen auf das Gesamtgewicht des Kauprodukts, beträgt.

**Revendications**

1. Produit à mâcher comestible pour animaux comprenant une teneur en amidon de 50 à 75 % en poids par rapport au poids total du produit à mâcher ;

   une teneur en humectant de 10 à 20 % en poids par rapport au poids total du produit à mâcher ;
   et une densité de 1,0 g.cm$^{-3}$ ou moins ;
   et l'amidon comprenant un amidon de pommes de terre et un amidon de maïs ;
   la teneur en amidon de maïs du produit à mâcher étant de 10 à 50 % en poids sur la base du poids total du produit à mâcher ;
   et la teneur en amidon de pommes de terre du produit à mâcher étant de 5 à 25 % en poids sur la base du poids total du produit à mâcher.

2. Produit à mâcher comestible pour animaux selon la revendication 1, l'amidon comprenant moins de 28 % en poids d'amylose si moins de 50 % en poids dudit amidon est de l'amidon de pommes de terre, ou moins de 20 % en poids d'amylose si au moins 50 % en poids dudit amidon est de l'amidon de pommes de terre.

3. Produit à mâcher comestible pour animaux selon l'une quelconque des revendications précédentes, comprenant en outre une teneur en graisse inférieure à 10 % en poids par rapport au poids total du produit à mâcher, préférablement 5 % en poids par rapport au poids total du produit à mâcher.

4. Produit à mâcher comestible pour animaux selon l'une quelconque des revendications précédentes, le contenu d'amidon ayant un degré de gélatinisation de 75 % en poids ou plus sur une base de contenu total d'amidon.

5. Produit à mâcher comestible pour animaux selon l'une quelconque des revendications précédentes, comprenant en outre une teneur en eau de 10 à 15 % en poids par rapport au poids total du produit à mâcher.

6. Produit à mâcher comestible pour animaux selon l'une quelconque des revendications précédentes, l'humectant comprenant du glycérol.

7. Produit à mâcher comestible pour animaux selon l'une quelconque des revendications précédentes, comprenant en outre une teneur en protéines inférieure à 10 % en poids de protéines par rapport au poids total du produit à mâcher.

8. Produit à mâcher comestible pour animaux selon l'une quelconque des revendications précédentes, le produit à mâcher étant incomplet sur le plan nutritionnel et/ou le produit à mâcher étant approprié ou adapté pour contribuer d'environ 5 % à environ 15 % de l'apport calorique quotidien de l'animal.

9. Produit à mâcher comestible pour animaux selon l'une quelconque des revendications précédentes, le produit à mâcher présentant une densité d'au moins 0,4 g.cm$^{-3}$.

10. Produit à mâcher comestible pour animaux selon l'une quelconque des revendications précédentes, comprenant en outre une teneur en fibres inférieure à 10 % en poids par rapport au poids total du produit à mâcher.

11. Produit à mâcher comestible pour animaux selon l'une quelconque des revendications précédentes, le produit à mâcher comestible pour animaux ayant un axe longitudinal comprenant : une paroi extérieure s'étendant dans la direction dudit axe longitudinal ; et une structure de support interne qui est en contact avec la surface intérieure de ladite paroi extérieure au niveau de trois points ou plus.

12. Produit à mâcher comestible pour animaux selon la revendication 11, ladite structure de support interne définissant une pluralité de canaux qui s'étendent dans la direction dudit axe longitudinal.

13. Procédé de production d'un produit à mâcher comestible pour animaux comprenant les étapes de :

a. mélange d'ingrédients comprenant une teneur en amidon de 50 à 75 % en poids et une teneur en humectant de 10 à 20 % en poids pour former un mélange de produit à mâcher comestible pour animaux ;

b. gélatinisation d'au moins une partie de l'amidon contenu dans le mélange pour former une composition à mâcher comestible pour animaux ;

c. extrusion de la composition hors d'une extrudeuse de sorte qu'elle sorte de l'extrudeuse à une température de 100 °C ou plus ; et

d. le fait de laisser la composition s'expanser jusqu'à une densité de 1,0 g.cm$^{-3}$ ou moins pour produire le produit à mâcher comestible pour animaux ;

le produit à mâcher comestible pour animaux comprenant un amidon de pommes de terre et un amidon de maïs ;

la teneur en amidon de maïs du produit à mâcher étant de 10 à 50 % en poids sur la base du poids total du produit à mâcher ;

et la teneur en amidon de pommes de terre du produit à mâcher étant de 5 à 25 % en poids sur la base du poids total du produit à mâcher.

5°

50 mm

2 mm

Figure 1

Force

Probe moving downwards

Probe moving upwards

Distance

Max. distance

(10 mm)

Figure 2

Figure 3

Figure 4

**Key:**
Red Line = TA load-cell response trace.
(d) Force maximum "P" for penetration of
the tip.
(e) Drag over the smooth probe section.
(f) Force maximum "D" for drag over the
screw-thread section.

Figure 5

Figure 6

Figure 7

**EP 3 369 313 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0575021 A2
- WO 2008014000 A1
- WO 0150882 A
- WO 2012156674 A

**Non-patent literature cited in the description**

- The Technology of Extrusion Cooking. Blackie Academic and Professional, 1994
- **QUIGLEY GA ; HEIN JW.** Comparative cleaning efficiency of manual and power brushing. *J Am Dent Assoc,* 1962, vol. 65, 26-29
- **TURESKY S ; GILMORE ND.** Reduced plaque formation by the chloromethyl analogue of victamine C. *J Periodontol,* 1970, vol. 41, 41-43
- **WARRICK J ; GORREL C.** A more sensitive method of scoring calculus. *11th Annual Veterinary Dental Forum,* 1997
- **TURESKY S ; GILMORE ND.** Reduced plaque formation by the chloromethyl analogue of victamine C. *J Periodontol,* 1970, vol. 41 (41-43